# EUROPEAN PATENT APPLICATION

(11) **EP 4 613 088 A1**
(43) Date of publication of application: **10.09.2025**
(21) Application number: 22964036.2
(22) Date of filing: 04.11.2022
(51) Int. Cl.: A01D 34/68, G05D 1/20

(54) **AUTONOMOUS WORKING APPARATUS AND SYSTEM, AND WORKING METHOD**

(71) Applicant: Positec Power Tools (Suzhou) Co., Ltd., Suzhou, Jiangsu 215123 (CN)
(72) Inventor: JIAO, Shiping, Suzhou, Jiangsu 215123 (CN); DU, Jiang, Suzhou, Jiangsu 215123 (CN); LI, Xinghong, Suzhou, Jiangsu 215123 (CN); ZHA, Xiahong, Suzhou, Jiangsu 215123 (CN); LAN, Bincai, Suzhou, Jiangsu 215123 (CN); LIAO, Liangliang, Suzhou, Jiangsu 215123 (CN)
(74) Representative: Kilburn & Strode LLP
(86) International application number: PCT/CN2022/129907
(87) International publication number: WO 2024/092728

(57) **Abstract**

An autonomous working apparatus (100) and system, and a working method. The autonomous working apparatus (100) comprises a body (10), a cutting assembly (20), a driving assembly (30), and a control circuit (40), wherein the control circuit (40) is at least configured to execute a mowing control process. The mowing control process comprises: acquiring map data of a first working area of a mowing task to be executed, the map data of the first working area being provided by a memory that pre-stores map data of different working areas; planning a moving path of the autonomous working apparatus (100) in the first working area at least according to the map data of the first working area, and controlling the autonomous working apparatus (100) to perform autonomous traversing and one-step mowing along the planned moving path, wherein the one-step mowing is realized by synchronously crushing grass or collecting grass during mowing; and after it is detected that the traversing of the first working area is completed, controlling the autonomous working apparatus (100) to switch to a state in which the autonomous working apparatus transfers to or is ready to transfer to a next first working area.

## Description

### TECHNICAL FIELD

The present application relates to the field of autonomous working apparatus control technology, particularly to an autonomous working apparatus and system, and working method applicable to such autonomous working apparatus.

### BACKGROUND

Currently, in the commercial lawn mower field, riding mowers are primarily used for grass cutting.

However, riding mowers typically require manual operation to complete lawn cutting, which inevitably increases labor costs. At the same time, these machines have certain requirements for the driving skills of operators, which can easily lead to instability in work efficiency and cutting quality.

### SUMMARY

In view of this, embodiments of the present application provide an autonomous working apparatus, system and working method to solve at least one problem existing in the background art. The following introduces several aspects of the present application.

In a first aspect, embodiments of the present application provide an autonomous working apparatus, adapted to perform at least one working task on a surface of a working area, comprising: a housing; a cutting assembly and a driving assembly, each connected to the housing; and, a control circuit connected to the cutting assembly and the driving assembly; wherein the control circuit is at least configured to execute a lawn mowing control process, the lawn mowing control process comprising: obtaining map data of a first working area for an intended mowing task, wherein the map data of the first working area is provided by a memory that pre-stores map data of different working areas; planning a movement path of the autonomous working apparatus in the first working area based at least on the map data of the first working area, and outputting a first instruction to the cutting assembly and the driving assembly to control the autonomous working apparatus to autonomously traverse the first working area along the planned movement path and perform single-pass mowing in the first working area; wherein the single-pass mowing is achieved through simultaneously mulching or collecting grass during mowing; outputting a second instruction to the cutting assembly and the driving assembly to control the autonomous working apparatus to switch to a state of moving or preparing to move toward a next first working area after detecting completion of traversal of the first working area.

In a second aspect, embodiments of the present application provide an autonomous working apparatus, adapted to perform at least one working task on a surface of a working area, comprising: a housing; a cutting assembly and a driving assembly, each connected to the housing; and, a control circuit connected to the cutting assembly and the driving assembly; wherein the control circuit is at least configured to execute a lawn mowing control process, the lawn mowing control process comprising: outputting a working instruction to the cutting assembly and the driving assembly to control the autonomous working apparatus to enter working area A to execute a mowing task, and marking the map data of working area A as active; outputting a working instruction to the cutting assembly and the driving assembly to control the autonomous working apparatus to enter working area B to execute a mowing task, and marking the map data of working area B as active, and removing or marking the map data of working area A as inactive after detecting completion of one coverage of working area A; wherein the average working efficiency of the autonomous working apparatus to complete the mowing tasks of working area A and working area B is 1 0min-40min per thousand square meters.

In a third aspect, embodiments of the present application provide an autonomous working apparatus, adapted to perform at least one working task on a surface of a working area, comprising: a housing; a cutting assembly and a driving assembly, each connected to the housing; and, a control circuit connected to the cutting assembly and the driving assembly; wherein the control circuit is at least configured to execute a lawn mowing control process, the lawn mowing control process comprising: obtaining map data of a first working area for an intended mowing task, wherein the map data of the first working area is provided by a memory that pre-stores map data of different working areas; planning a movement path of the autonomous working apparatus in the first working area based at least on the map data of the first working area, and outputting a working instruction to the driving assembly and the cutting assembly to control the autonomous working apparatus to execute the mowing task of the first working area along the planned movement path until one coverage of the first working area is completed; outputting a waiting instruction to the driving assembly and the cutting assembly to control the autonomous working apparatus to switch to a state of waiting to execute the mowing task of the next first working area.

In a fourth aspect, embodiments of the present application provide an autonomous working system, comprising: an autonomous working apparatus, comprising a housing, a cutting assembly and a driving assembly each connected to the housing, and a control circuit connected to the cutting assembly and the driving assembly; wherein the control circuit is at least configured to execute a lawn mowing control process, the lawn mowing control process comprising: obtaining map data of each first working area for an intended mowing task; planning a movement path of the autonomous working apparatus in each first working area based at least on the map data, and outputting a working instruction to the driving assembly and the cutting assembly to control the autonomous working apparatus to execute mowing tasks in multiple independent first working areas within one day; wherein each mowing task includes: autonomously traversing the current first working area along the planned movement path and performing single-pass mowing; wherein the single-pass mowing is achieved through simultaneously mulching or collecting grass during mowing; switching to a state of moving or preparing to move toward the next first working area after completing the traversal of the current first working area; and, an external power source, configured to be coupled with the autonomous working apparatus to provide at least power support for the autonomous working apparatus to execute the mowing task.

In a fifth aspect, embodiments of the present application provide an autonomous working apparatus, adapted to perform at least one working task on a surface of a working area, comprising: a housing; a cutting assembly and a driving assembly, each connected to the housing; and, a control circuit connected to the cutting assembly and the driving assembly; wherein the control circuit is at least configured to execute a lawn mowing control process, the lawn mowing control process comprising:
obtaining map data of each first working area for an intended mowing task; planning a movement path of the autonomous working apparatus in each first working area based at least on the map data, and outputting a working instruction to the driving assembly and the cutting assembly to control the autonomous working apparatus to execute mowing tasks in multiple independent first working areas; wherein each mowing task includes: autonomously traversing the current first working area along the planned movement path and performing single-pass mowing, wherein the single-pass mowing is achieved through simultaneously mulching or collecting grass during mowing;
switching to a state of moving or preparing to move toward the next first working area after completing the traversal of the current first working area; wherein each mowing task is charged separately based at least on the map data of the current first working area.

In a sixth aspect, embodiments of the present application provide a working method of an autonomous working apparatus, wherein the autonomous working apparatus is adapted to perform at least one working task on a surface of a working area, wherein the method comprises: obtaining map data of a first working area for an intended mowing task, wherein the map data of the first working area is provided by a memory that pre-stores map data of different working areas; planning a movement path of the autonomous working apparatus in the first working area based at least on the map data of the first working area; autonomously traversing the first working area along the planned movement path and performing single-pass mowing; wherein the single-pass mowing is achieved through simultaneously mulching or collecting grass during mowing; switching to a state of moving or preparing to move toward the next first working area after completing the traversal of the first working area.

In a seventh aspect, embodiments of the present application provide an autonomous working system, comprising: the autonomous working apparatus according to any one of the first to third aspects, or the fifth aspect; a terminal, communicatively connected with the autonomous working apparatus; and, a server, communicatively connected with the autonomous working apparatus and the terminal, having the memory, configured to send the map data of the first working area to the autonomous working apparatus and/or the terminal before the autonomous working apparatus executes the mowing task.

In an eighth aspect, embodiments of the present application provide a computerreadable storage medium, wherein a computer program is stored on the storage medium, and steps of the method according to the sixth aspect are implemented when the computer program is executed.

In a ninth aspect, embodiments of the present application provide a computer device, comprising: a memory and a processor, wherein the memory stores a computer program; the processor implements steps of the method according to the sixth aspect when executing the computer program.

The autonomous working apparatus of embodiments of the present application can obtain the map of the lawn to be mowed, plan a movement path in the lawn based on the map, autonomously traverse the cuttable area of the lawn along the planned movement path and perform single-pass mowing, thereby completing the current maintenance of the lawn, and enter a state of moving or preparing to move toward the next lawn to be mowed.

Thus, the autonomous working apparatus of embodiments of the present application has at least the following advantageous effects:
1. It can work autonomously on lawns, and has a one-time maintenance effect (such as maintaining the lawn at a frequency of at least 1-2 weeks), thereby replacing traditional riding mowers that require human control and saving labor costs;
2. It can autonomously obtain the customer's lawn map, and can immediately perform mowing operations after entering the customer's lawn, having excellent work continuity, which is conducive to improving work efficiency;
3. It can plan appropriate movement paths according to the map of the lawn to be mowed, so that even after completing one traversal, it can have a high coverage rate, which is conducive to improving cutting quality, and can also reduce subsequent supplementary cutting operations, both improving efficiency and further saving costs;
4. Traditional riding mowers usually require manual processing of grass clippings accumulated on the grass surface after cutting, leading to reduced work efficiency and increased labor costs; while the autonomous working apparatus of embodiments of the present application can autonomously traverse the first working area and perform single-pass mowing, so that after the traversal is completed, the grass surface can be flat and beautiful without basically needing secondary processing of grass clippings, improving work efficiency and further saving labor costs;
5. The autonomous working apparatus of embodiments of the present application can autonomously complete the maintenance of different customers' lawns, and can also ensure work efficiency and cutting quality, achieving immediate mowing upon entry and leaving immediately after mowing, which is conducive to saving costs, improving the evaluation of commercial teams and order processing capacity, enabling commercial teams to continuously visit more users for mowing in one day, and improving team effectiveness.

### BRIEF DESCRIPTION OF THE DRAWINGS

The drawings forming part of the present application provide further understanding of the present invention. The illustrative embodiments of the present invention and their descriptions are used to explain the present invention and do not constitute improper limitations of the present invention.

To more clearly explain the technical solutions in the embodiments of the present invention, a brief introduction to the drawings needed in the description of the embodiments will be provided below. Obviously, the drawings described below are only some embodiments of the present invention. For those skilled in the art, other drawings can be obtained from these drawings without creative labor.
FIG. 1 is a schematic diagram showing the composition of an autonomous working apparatus according to an embodiment of the present application;
FIG. 2(a)-(e) illustrate schematic diagrams of paths planned by the autonomous working apparatus according to an embodiment of the present application;
FIG. 3 illustrates a schematic diagram of a path planned by the autonomous working apparatus according to an embodiment of the present application;
FIG. 4(a) illustrates a cuttable area of a first working area map according to an embodiment of the present application;
FIG. 4(b) illustrates a cuttable area of a first working area map according to another embodiment of the present application;
FIG. 4(c) illustrates a cuttable area of a first working area map according to yet another embodiment of the present application;
FIG. 5 illustrates a movement path planned by the autonomous working apparatus when encountering a preset event according to an embodiment of the present application;
FIG. 6 illustrates a supplementary mowing path planned by the autonomous working apparatus according to an embodiment of the present application;
FIG. 7 illustrates a movement path of the autonomous working apparatus after completing a mowing task according to an embodiment of the present application;
FIG. 8 is a schematic diagram showing the autonomous working apparatus performing a mowing task according to an embodiment of the present application;
FIG. 9 is a schematic diagram showing the route of the autonomous working apparatus executing a mowing task in a first region according to an embodiment of the present application;
FIG. 10 is a schematic diagram showing the distribution of first working areas in a user's home in a first region according to an embodiment of the present application;
FIG. 11 illustrates a display interface of the interactive component of the autonomous working apparatus according to an embodiment of the present application;
FIG. 12 is a schematic diagram showing the composition of an autonomous working system according to an embodiment of the present application;
FIG. 13 is a schematic diagram showing terminal interaction of the autonomous working system according to an embodiment of the present application;
FIG. 14(a) illustrates a schematic diagram showing the operation of the autonomous working apparatus according to an embodiment of the present application;
FIG. 14(b) illustrates a schematic diagram showing the transition operation of the autonomous working apparatus according to an embodiment of the present application;
FIG. 15 is a schematic diagram showing the composition of an autonomous working system according to an embodiment of the present application;
FIG. 16 is a flow chart showing the working method of the autonomous working apparatus according to an embodiment of the present application.

### DETAILED DESCRIPTION

To make the above objectives, features, and advantages of the present invention more apparent and understandable, detailed descriptions of specific embodiments of the present invention will be provided below in conjunction with the drawings. Many specific details are described in the following description to provide a thorough understanding of the present invention. However, the present invention can be implemented in many different ways other than those described here, and those skilled in the art can make similar improvements without departing from the essence of the present invention. Therefore, the present invention is not limited by the specific embodiments disclosed below.

With the rapid development of technology, intelligent control technology is increasingly widely applied in people's lives. As an intelligent product derived from intelligent control technology, autonomous working apparatus can bring convenience and efficiency to people's lives, thus autonomous working apparatus is frequently used in people's daily lives.

Typically, an autonomous working apparatus can refer to a device with automatic driving capability, which can execute working tasks during the automatic driving process. The types of autonomous working apparatus can include various kinds, which are not limited by embodiments of this disclosure. By way of example, the autonomous working apparatus can be an automatic lawn mower, automatic snow sweeper, automatic watering machine, automatic leaf blower, automatic floor sweeper, mopping robot, sweeping and mopping integrated robot, etc. Furthermore, the autonomous working apparatus is adapted to perform one or more working tasks within a working area. For example, when the autonomous working apparatus is an automatic lawn mower, it can perform mowing tasks within the working area; for another example, when the autonomous working apparatus is an automatic snow sweeper, it can perform snow removal tasks within the working area; for yet another example, when the autonomous working apparatus is an automatic watering machine, it can perform watering tasks within the working area; for yet another example, when the autonomous working apparatus is an automatic leaf blower, it can perform leaf blowing tasks within the working area; for yet another example, when the autonomous working apparatus is an automatic floor sweeper, it can perform sweeping tasks within the working area; for yet another example, when the autonomous working apparatus is equipped with both cutting and watering assemblies, it can perform both mowing tasks and watering tasks within the working area, and so on.

However, the above-mentioned autonomously working robots are currently mainly applied in the household domain, and it is rare to see lawn mowing robots using intelligent control in the commercial mowing field.

In the commercial mowing field, commercial teams typically drive transport vehicles loaded with lawn mowers and other gardening tools to different households for lawn maintenance according to scheduled orders within a day, including multiple tasks such as mowing, edging, pruning, and leaf blowing. These tasks usually need to be completed manually by workers, resulting in high labor costs for the team. Additionally, factors such as weather, terrain, vegetation distribution, and growth conditions all affect the team's operation time, and the longer the operation time, the higher the labor costs for the commercial team. Furthermore, for riding mowers, different people in the commercial team have varying driving skills, which can easily lead to instability in work efficiency and cutting quality.

On the other hand, although there have been attempts to install sensors on riding mowers to achieve automatic control of mowing, such methods usually require setting up boundary lines around the lawn, which increases the user's installation and maintenance costs. Moreover, when executing mowing tasks in multiple dispersed working areas, the constraints of boundary lines can easily limit the machine's efficiency, making it difficult to quickly match different working areas for autonomous entry and operation. Additionally, if part of the boundary line is damaged and the user does not discover it, the machine may run outside the lawn because it cannot accurately identify the boundary line, thus creating certain safety hazards.

Besides, some commercial teams have replaced riding mowers with multiple small household intelligent lawn mowers to reduce labor and achieve automatic control of mowing. However, such methods usually require equipping multiple intelligent lawn mowers, and the cost is still high. Furthermore, household intelligent lawn mowers typically move at slower speeds, have lower work efficiency, and are basically only suitable for daily maintenance-type cutting for lawns with stable grass conditions. Commercial lawn mowers, on the other hand, usually need to be applied to lawns with varying grass conditions (such as lawns with more adverse conditions like tall grass and/or dense grass), and each cutting needs to achieve a quality that does not require maintenance again within a certain period (e.g., 1-2 weeks). In other words, commercial lawn mowers usually need to have the ability to cut in one go, while ordinary household intelligent lawn mowers often do not have such one-time cutting capability and basically maintain the beauty of the lawn through daily maintenance. Additionally, for tall grass and/or dense grass lawns, the maintenance effect of household intelligent lawn mowers is also limited.

Therefore, in the commercial mowing field, there is an urgent need for an autonomous lawn mowing robot to solve the above problems, so that this autonomous lawn mowing robot has better evaluation in terms of cost, (multi-working area) work efficiency, and cutting quality.

Embodiments of the present application provide an autonomous working apparatus. This autonomous working apparatus has one-time maintenance capability, can quickly match maps of working areas, has high coverage rate in the initial traversal, basically requires no secondary processing of grass clippings, and has the working characteristics of immediate mowing upon entry and leaving immediately after mowing.

In some embodiments, the autonomous working apparatus can collect environmental information and/or positioning information through sensors, and transmit this information to the control circuit for analysis and processing to generate instructions that can control the actions of the cutting assembly and the driving assembly, thereby enabling autonomous operation in different working areas and saving labor costs.

In some embodiments, rapid entry and operation of the autonomous working apparatus can be achieved by pre-drawing and storing maps of multiple working areas to be mowed. For example, a position coordinate collection device can be used to precollect lawn boundary data from three users A, B, and C, and then generate corresponding lawn maps. Thus, when the autonomous working apparatus arrives at the homes of users A/B/C, there is no need to create maps on-site, but instead, it can directly match the lawn maps of users A/B/C and then enter the lawn to work. Therefore, although some riding mowers can work autonomously within a particular working area, they struggle to meet the efficiency requirements for transitioning between different working areas, resulting in low working efficiency across multiple working areas in a day. In contrast, the autonomous working apparatus of embodiments of the present application can directly enter and work by quickly matching maps of corresponding working areas, greatly improving the working efficiency of commercial lawn mowers across multiple working areas in a day.

In some embodiments, the working efficiency and cutting quality of the autonomous working apparatus can be improved through path planning. For example, regular movement paths compared to random movement paths can greatly improve the coverage rate of the autonomous working apparatus, which is beneficial for improving lawn cutting quality while also reducing subsequent supplementary cutting operations and improving work efficiency. Therefore, although some riding mowers can work autonomously within a particular working area, they typically cut along random paths, resulting in low coverage rates and easily causing over-cutting in some areas while leaving other areas uncut. This leads to poor cutting quality, requiring more movement time within the working area to improve coverage, thus reducing work efficiency. The coverage rate can be expressed as the ratio of the actual cutting area of the autonomous working apparatus upon completion of traversal to the area of the cuttable area in the working area. The autonomous working apparatus of embodiments of the present application can plan regular movement paths through path planning technology, enabling the autonomous working apparatus to achieve high coverage rates even after completing one traversal, thereby improving cutting quality and work efficiency.

In some embodiments, the working efficiency and cutting quality of the autonomous working apparatus can be improved by modifying the cutting assembly. The cutting assembly reflects the cutting capability of the autonomous working apparatus. For example, the cutting assembly of household intelligent lawn mowers typically has a smaller cutting diameter and limited load-bearing capacity during cutting, making household intelligent lawn mowers typically only capable of daily maintenance-type cutting and lacking the one-time cutting capability of commercial lawn mowers. The autonomous working apparatus of embodiments of the present application improves the cutting assembly so that it not only has a larger cutting diameter and can bear certain cutting loads, but also can perform single-pass mowing (simultaneously mulching or collecting grass during cutting), thereby ensuring a flat and beautiful grass surface without basically needing secondary processing of grass clippings. This further improves the cutting quality and work efficiency of the autonomous working apparatus and further saves labor costs.

### Detailed Description of the Autonomous Working Apparatus with Reference to the Drawings

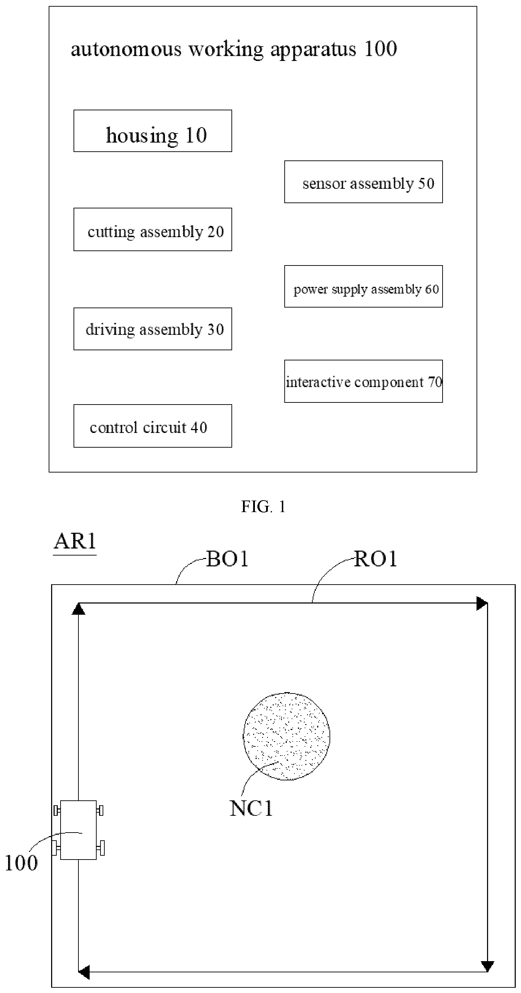

In one embodiment, as shown in FIG. 1, the autonomous working apparatus 100 can include a housing 10, a cutting assembly 20 and a driving assembly 30 each connected to the housing 10, and a control circuit 40 connected to the cutting assembly 20 and the driving assembly 30. The components of the autonomous working apparatus 100 are introduced below.

The housing 10 can include the outer casing and chassis of the autonomous working apparatus 100, which is mainly used for installing the cutting assembly 20, driving assembly 30, sensor assembly 50, interactive component 70, and so on. In some implementations, the housing 10 can also include a protective cover to prevent human injury and/or anti-collision components to buffer impacts.

The cutting assembly 20 can be configured to perform mowing actions according to cutting instructions to cut or shred grass to be trimmed as the autonomous working apparatus 100 moves. In some implementations, the cutting assembly 20 includes a mulching assembly that can use airflow to lift and shred cut grass while mowing, or simultaneously shred grass by creating cutting trajectories at different heights. In other embodiments, the autonomous working apparatus 100 can also include a grass collection assembly working in cooperation with the cutting assembly. The grass collection assembly can suck the cut grass into a collection box while the cutting assembly is cutting the grass, and the collection box can be emptied when full. Through these methods, under general working conditions, commercial teams can directly leave the current lawn after cutting and enter a state of moving or preparing to move toward the next lawn without needing to further process the cut grass clippings (as the grass clippings are processed simultaneously during cutting), achieving the goal of leaving immediately after mowing. This helps improve the daily work efficiency of commercial teams, reduces labor time costs, and also helps improve the order processing capacity of commercial teams, thereby enhancing team effectiveness.

The driving assembly 30 can be configured to drive the autonomous working apparatus 100 to move according to driving instructions. By way of example, the driving assembly 30 can include driving components such as motors, and moving components connected to such driving components. The driving assembly 30 can use the driving components to drive the moving components to move according to the driving instructions, thereby driving the autonomous working apparatus 10 to move. Typically, the moving components can be installed at the bottom of the autonomous working apparatus 100 and can include caster wheels, drive wheels, and so on. When the moving components include caster wheels, they can be used to change the direction of the autonomous working apparatus 100 and can be installed at the front end (the front end in the moving direction of the autonomous working apparatus 100) at the bottom of the autonomous working apparatus 100. When the moving components include drive wheels, they can be used to drive the autonomous working apparatus 100 to move and can be installed at the side positions at the bottom of the autonomous working apparatus 100.

The control circuit 40 is connected to the cutting assembly 20 and the driving assembly 30. It can be understood that besides control functions, the control circuit 40 can also have functions such as recognition, analysis, modulation/demodulation, determination, etc., which need to be implemented prior to realizing the control function. Correspondingly, the control circuit can include a controller (also called a processor), as well as recognition unit, path planning unit, analysis unit, modulation/demodulation unit, determination unit, etc. These units can be partially or fully integrated into the control circuit 40, or can be separately set up in the control circuit 40. It should be noted that the connection methods between the control circuit 40 and the cutting assembly 20, driving assembly 30, and other components can be electrical connections, communication connections, or partly mechanical connections, as long as they enable necessary signal (also called data, instructions) transmission between the control circuit 40 and these components. For example, the control circuit 40 can be directly connected to these components, indirectly connected through intermediate media, or connected through internal elements.

In some implementations of this embodiment, the autonomous working apparatus 100 also includes a sensor assembly 50 connected to the control circuit 40. The sensor assembly 50 can be used to collect information, such as position information of the autonomous working apparatus 100, environmental information of the environment where the autonomous working apparatus 100 is located (for example, environmental information in the forward direction of the autonomous working apparatus 10 and ground environmental information of the ground where it is located), etc. The types of sensor assembly 50 can include various kinds, which are not limited by embodiments of this application. By way of example, the sensor assembly 102 can include but is not limited to ultrasonic sensors, infrared sensors, vision sensors, laser sensors, image sensors, satellite positioning sensors, etc.

There can be multiple ways for the sensor assembly 50 to collect information. Optionally, the sensor assembly 50 can be configured to emit signals around the autonomous working apparatus 100 to obtain environmental information of the environment where the autonomous working apparatus 100 is located based on the reflection signals of the emitted signals. When collecting information using this method, the sensor assembly 50 can include ultrasonic sensors, infrared sensors, laser sensors, etc. Optionally, the sensor assembly 50 can use image sensing to obtain environmental information of the environment where the autonomous working apparatus 100 is located. When collecting information using this method, the sensor assembly 50 can include vision sensors (such as monocular cameras, multi-eye cameras, depth cameras, etc.), image sensors, etc. Optionally, the sensor assembly 50 can use satellite positioning to obtain the position information of the autonomous working apparatus 100. When collecting information using this method, the sensor assembly 50 can include satellite positioning sensors.

In some implementations of this embodiment, the sensor assembly 50 is configured to generate sensor data based on the collected information, so that the control circuit 40 can control the autonomous working apparatus 100 based on the generated sensor data. In some implementations, the sensor data can include positioning data for indicating the position information of the autonomous working apparatus 100, which is generated by the sensor assembly 50 based on the collected position information of the autonomous working apparatus 100. In some implementations, the sensor data can also include environmental data reflecting the environment where the autonomous working apparatus 100 is located, which is generated by the sensor assembly 50 based on the collected environmental information of the environment where the autonomous working apparatus 100 is located.

In some implementations of this embodiment, the control circuit 40 is at least configured to execute a control process, for example, a lawn mowing control process that controls the autonomous working apparatus 100 to perform mowing tasks. The lawn mowing control process is introduced below.

The lawn mowing control process executed by the control circuit 40 can include:
P100: Obtaining map data of a first working area for an intended mowing task, wherein the map data of the first working area is provided by a memory that pre-stores map data of different working areas.

In some implementations of this embodiment, a commercial team's daily orders show working areas that need mowing tasks, which can be called first working areas. As for users who are also clients of the commercial team, but whose lawns have not yet reached the maintenance date or have reached the maintenance date but cannot be maintained on that day due to unexpected situations, and therefore are not shown in the orders for that day, these working areas can be called second working areas. The map data of various first working areas and second working areas can be obtained in advance by the commercial team and stored in a memory, so that the commercial team can access them at any time when they need to use the maps of the corresponding working areas. By way of example, this memory can be a local memory, such as a memory in the autonomous working apparatus 100, a memory in a charging station, or it can be mounted on a virtual server through cloud storage technology (for example, in the form of cloud drives).

In some implementations of this embodiment, the map data in the memory can be pre-established and stored. For example, users can first collect and store position data of the boundary of the first working area and position data of non-cuttable areas within the first working area. Then, they can use one or more of the autonomous working apparatus or terminal devices to establish a map of the first working area based on the stored position data. Subsequently, the established map data of the first working area is stored in the memory for easy retrieval when the autonomous working apparatus 100 is preparing to or executing a mowing task in that first working area.

Through this method, it is conducive for the autonomous working apparatus 100 to quickly obtain the map data of the first working area before executing the mowing task of the first working area, thereby reducing manual intervention, achieving immediate mowing upon entry, and forming a continuous work rhythm.

P200: Planning a movement path of the autonomous working apparatus 100 in the first working area based at least on the map data of the first working area, and outputting a first instruction to the driving assembly 30 and the cutting assembly 20 to control the autonomous working apparatus 100 to autonomously traverse the first working area along the planned movement path and perform single-pass mowing; wherein the single-pass mowing is achieved through simultaneously mulching or collecting grass during mowing.

In some implementations of this embodiment, the path planning method can be global map-based path planning, or path planning after partitioning the first working area, or segmented path planning based on navigation between two points. In some implementations, when planning movement paths using map data, different path types can be planned, and/or the overlap ratio between adjacent paths can be controlled to improve the coverage rate of the working area. Compared to random cutting, cutting along planned paths can greatly improve the missed cutting situations of the lawn. The coverage rate can be expressed as the ratio of the actual cutting area of the autonomous working apparatus 100 upon completion of traversal to the area of the cuttable area in the first working area.

In some implementations of this embodiment, completing the traversal of the first working area can mean that the autonomous working apparatus 100 moves from the starting point to the endpoint of the planned movement path along the planned movement path in the cuttable area of the first working area. The planned movement path can be one or multiple paths. When there are multiple planned paths, completing traversal can mean moving from the starting point to the endpoint of the first planned path, then from the starting point to the endpoint of the second planned path, until moving from the starting point to the endpoint of the last planned path.

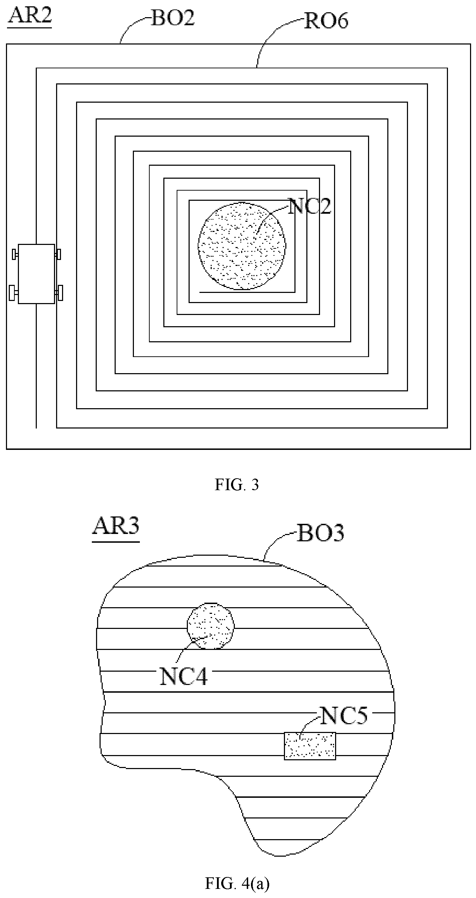

In some implementations of this embodiment, the cuttable area can be defined as the area between the boundary of the first working area and the non-cuttable areas in the map of the first working area. The boundary data of the first working area and the position data of non-cuttable areas can both be included in the map data of the first working area. As shown in FIG. 4(a), the first working area AR3 has non-cuttable areas NC4 and NC5, so its cuttable area is the horizontally filled area between boundary BO3 and non-cuttable areas NC4 and NC5.

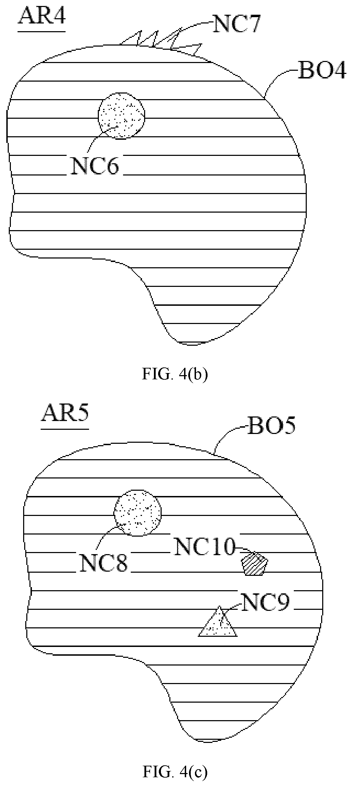

In some implementations of this embodiment, the division of cuttable areas also needs to exclude obvious non-cuttable areas near the boundary of the first working area (for example, obvious narrow areas). These areas are usually caused by the introduction of discrete data points during mapping, but these data points are usually also included in the map data of the first working area. Therefore, when planning paths, such non-cuttable areas need to be removed before planning. As shown in FIG. 4(b), the first working area AR4 has non-cuttable areas NC6 and NC7, so its cuttable area can be represented as the horizontally filled area between the new boundary BO4 and non-cuttable area NC6 after removing non-cuttable area NC7 from boundary BO4. Optionally, after removing non-cuttable area NC7, this part of the boundary can also be smoothed to form a smooth closed virtual boundary.

In some implementations of this embodiment, there may also be temporary fixed obstacles in the first working area, such as temporarily placed chairs, etc. In this case, the division of cuttable areas also needs to exclude the areas where such temporary fixed obstacles are located. As shown in FIG. 4(c), the first working area has non-cuttable areas NC8 and NC9, as well as a temporary fixed obstacle NC10. The position data of non-cuttable areas NC8 and NC9 can be included in the map data of the first working area AR5, while the position data of temporary fixed obstacle NC10 can be detected by the autonomous working apparatus 100. Therefore, the cuttable area of the first working area AR5 can be represented as the horizontally filled area between the first working area AR5 and non-cuttable areas NC8, NC9, as well as temporary fixed obstacle NC10.

Optionally, based on the positional relationship between the cuttable area and non-cuttable areas mentioned above, the movement path of the autonomous working apparatus 100 in the cuttable area can be planned by the control circuit 40 based on the boundary data of the first working area and the position data of non-cuttable areas in the first working area. In other words, the map data of the first working area can include the boundary data of the first working area and the position data of at least a portion of non-cuttable areas. The control circuit 40 can be configured to plan the movement path of the autonomous working apparatus 100 in the first working area based on the boundary data of the first working area and the position data of at least a portion of non-cuttable areas. Optionally, according to the statements above, non-cuttable areas can include position areas marked as obstacles in the map of the first working area, obvious narrow areas on the map boundary of the first working area (for example, serrated areas), and temporary fixed obstacles detected by the autonomous working apparatus 100.

In some implementations of this embodiment, single-pass mowing can mean that grass clippings are also being processed while mowing. Thus, under general working conditions (for example, when the grass is not particularly tall or not the first cutting of tall grass in early spring), when the autonomous working apparatus 100 completes mowing, the grass clippings are also basically processed, without needing secondary processing. Additionally, in the commercial mowing field, lawns are usually maintained in one go, so the cut grass clippings are generally longer. If these grass clippings are not shredded or collected, they will cover the surface of the grass, which is not only unsightly but also has adverse effects on grass growth. The autonomous working apparatus 300 of this embodiment can shred or collect long grass clippings simultaneously during cutting, having the capability of single-pass mowing. This is conducive to meeting the efficient mowing needs of commercial lawn mowers to mow immediately upon entry and leave immediately after mowing. The specific mulching and grass collection methods can refer to the mulching mechanism of the mulching assembly and the grass collection mechanism of the grass collection assembly mentioned earlier, which will not be elaborated here.

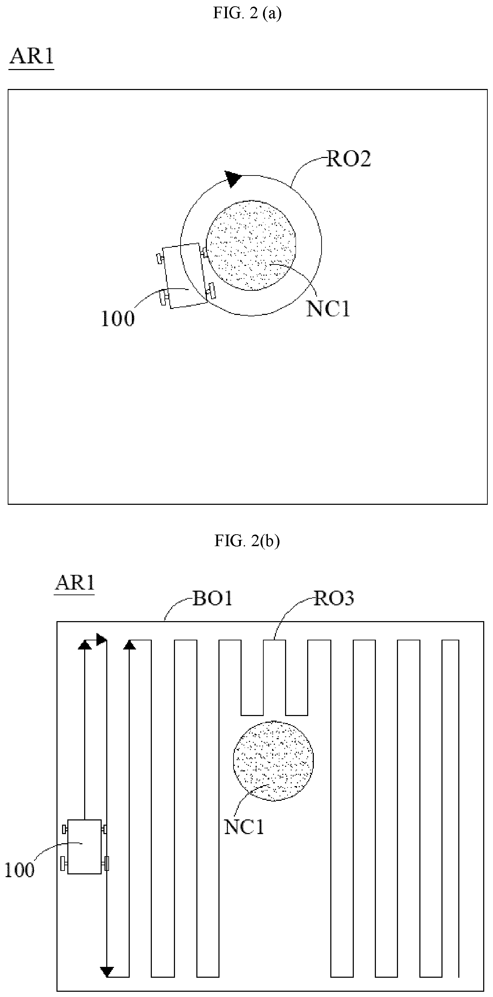

Below, FIG. 2(a) to 2(e) will be used to illustratively describe the completion of a mowing task in the first working area.

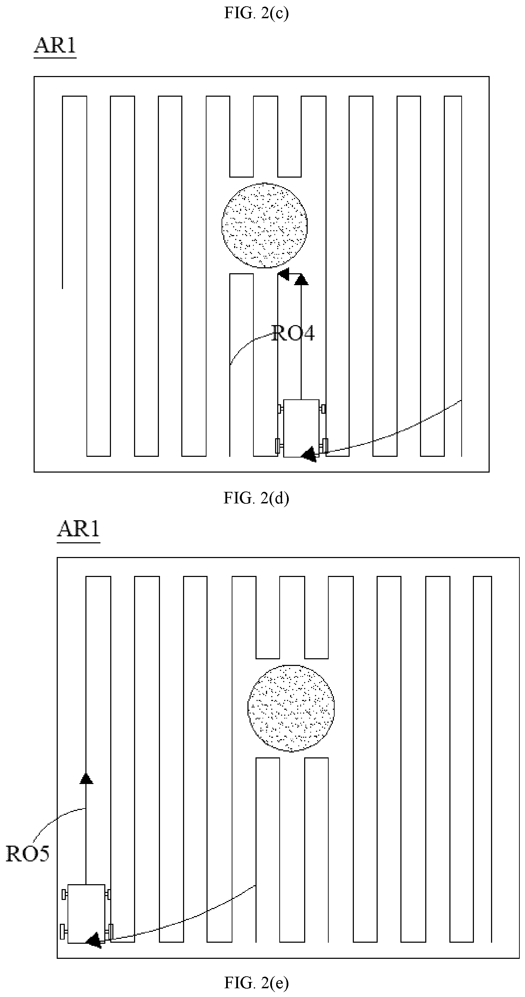

Referring to FIG. 2, when the autonomous working apparatus 100 needs to perform a mowing task for the first working area AR1, according to the map data of the first working area AR1, a non-cuttable area NC1 is marked in the first working area AR1. Based on the previous descriptions, the cuttable area of the first working area AR1 can be represented as the blank area between boundary BO1 and non-cuttable area NC1 (in FIG. 2, the blank part represents the cuttable area).

When executing the mowing task, for example, in FIG. 2(a), the control circuit 40 planned a first boundary cutting path RO1 along the boundary BO1 of the first working area AR1. After the autonomous working apparatus 100 completed one mowing operation along the first boundary cutting path RO1, it completed the mowing task near boundary BO1. For example, in FIG. 2(b), the control circuit 40 planned a second boundary cutting path RO2 along the edge of the non-cuttable area NC1. After the autonomous working apparatus 100 completed one mowing operation along the second boundary cutting path RO2, it completed the mowing task near the edge of the non-cuttable area NC1. For example, in FIG. 2(c) to 2(e), the control circuit 40 planned movement paths RO3, RO4, and RO5 in the area between boundary BO1 and non-cuttable area NC1 that still needed to execute the mowing task. After the autonomous working apparatus 100 sequentially completed one mowing operation along movement paths RO3, RO4, and RO5, it completed one traversal of the first working area AR1. Furthermore, since the autonomous working apparatus 100 performed single-pass mowing, there was basically no need for secondary processing of grass clippings. Thus, after completing one traversal of the first working area AR1, the autonomous working apparatus 100 essentially completed the mowing task for the first working area AR1.

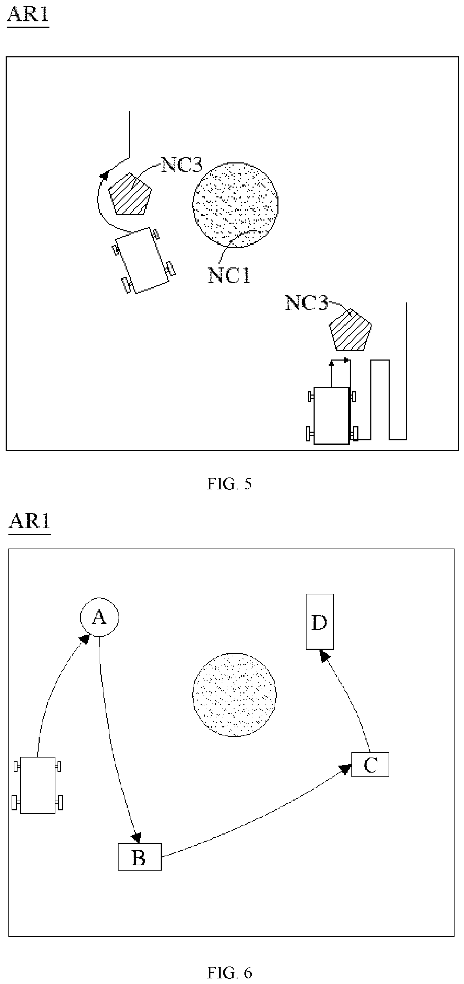

In some implementations of this embodiment, referring to FIG. 5, if the autonomous working apparatus 100 encounters an obstacle NC3 not marked in the map of the first working area AR1 while driving along the planned movement path, it can continue executing the mowing task by either detouring and returning to the originally planned path or turning around and re-planning the path.

It can be understood that the movement paths RO3, RO4, and RO5, apart from being boustrophedon paths, can also be other regular paths, such as rectangular spiral paths, spiral paths, or composites of any multiple types of paths. For example, in some implementations, referring to FIG. 3, when the autonomous working apparatus 100 needs to perform a mowing task for the first working area AR2, according to the map data of the first working area AR2, there is a non-cuttable area NC2 marked in the first working area AR2, and the position of the non-cuttable area NC2 is in the central area of the first working area AR2. For example, in FIG. 3, the control circuit 40 planned a rectangular spiral path RO6 that makes the autonomous working apparatus 100 gradually move inward. After the autonomous working apparatus 100 completed one mowing operation along the rectangular spiral path RO6, it completed the mowing task for the first working area AR2.

It should be noted that for the first working area AR2, the control circuit 40 could also first plan a boundary cutting path, then plan a path for cutting the edge of the non-cuttable area NC2, and finally plan a boustrophedon path to complete the cutting of the remaining area. However, compared to the rectangular spiral path (which can complete the boundary cutting during the initial spiral and complete the edge cutting of the non-cuttable area NC2 during the last spiral), this planning method would seem somewhat inefficient. Therefore, in some embodiments, the control circuit 40 can determine an appropriate path type based on the map data of the first working area to plan a more efficient movement path, thereby more quickly completing the mowing task of the first working area.

In some implementations of this embodiment, the first instruction can include cutting instructions and driving instructions, so that the cutting assembly 20 can perform mowing actions according to the first instruction, and the driving assembly 30 can drive the driving components to drive the moving components to move according to the first instruction, thereby driving the autonomous working apparatus 100 to move.

P300: Outputting a second instruction to the cutting assembly 20 and the driving assembly 30 to control the autonomous working apparatus 100 to switch to a state of moving or preparing to move toward a next first working area after detecting completion of traversal of the first working area.

In some implementations of this embodiment, "switching to a state of moving or preparing to move toward the next first working area" can mean that the autonomous working apparatus 100 at least maintains a state of being powered on but not executing mowing tasks, either in transfer or preparing for transfer. By way of example, this state can be a state where the autonomous working apparatus 100 autonomously returns to a predetermined position and waits for external input, or a state where the autonomous working apparatus 100 returns to a predetermined position and prepares to execute the working task of the next first working area, or a state where the autonomous working apparatus 100 sends a notification message of completing the mowing task to a terminal (of team personnel) and waits for external input. Optionally, the above-mentioned predetermined positions can be at least one of: the position area where the autonomous working apparatus 100 enters the first working area, the starting point area of the planned movement path of the autonomous working apparatus 100, the starting point area where the autonomous working apparatus 100 enters the next first working area, a pre-set fixed area in the first working area, or an area on the transport vehicle. Optionally, the above-mentioned waiting for external input can be at least one of: waiting for working instruction input, waiting for return to transport vehicle instruction input, waiting for mowing data input, or waiting for boarding/disembarking instruction input.

In some implementations of this embodiment, the second instruction can include a stop operation instruction for the cutting assembly 20, a stop operation instruction or a driving instruction for the driving assembly 30, to make the autonomous working apparatus 100 enter a state of preparing for transfer. Optionally, the second instruction can include a stop operation instruction for the cutting assembly 20 and a driving instruction for the driving assembly 30, to make the autonomous working apparatus 100 enter a state of transfer.

In some implementations of this embodiment, "the autonomous working apparatus 100 is in a state of moving or preparing to move toward the next first working area" can also indicate that, in this state, the control circuit 40 can begin executing the aforementioned lawn mowing control process at any time before or when the autonomous working apparatus 100 reaches the next first working area, so that the autonomous working apparatus 100 can promptly execute the mowing task of the next first working area. This is conducive to ensuring the work continuity of the autonomous working apparatus 100 within a day.

In another embodiment, the autonomous working apparatus 200 includes a housing, a cutting assembly and a driving assembly each connected to the housing, and a control circuit connected to the cutting assembly and the driving assembly. The setup of the components in the driving assembly and cutting assembly and their connection relationship with the housing can refer to the autonomous working apparatus 100, which will not be elaborated here.

The difference between the autonomous working apparatus 200 and the autonomous working apparatus 100 lies at least in the lawn mowing control process executed by the control circuit. This lawn mowing control process includes:
P100': Obtaining map data of a first working area for an intended mowing task, wherein the map data of the first working area is provided by a memory that pre-stores map data of different working areas.
P200': Planning a movement path of the autonomous working apparatus 200 in the first working area based at least on the map data of the first working area, and outputting a working instruction to the driving assembly and the cutting assembly to control the autonomous working apparatus 200 to execute the mowing task of the first working area along the planned movement path until one coverage of the first working area is completed.
P300': Outputting a waiting instruction to the driving assembly and the cutting assembly to control the autonomous working apparatus 200 to switch to a state of waiting to execute the mowing task of the next first working area.

In some implementations of this embodiment, completing one coverage of the first working area can mean that the autonomous working apparatus 200 completes one mowing operation along the planned movement path in the cuttable area of the first working area. In some implementations, after the autonomous working apparatus 200 completes one coverage, the lawn in the cuttable area basically has no missed grass, the grass clippings are basically fallen into the grass, and the lawn surface is relatively flat. Optionally, "basically" can indicate a numerical fluctuation within a certain range, for example, it can be a fluctuation value of ±20%. For example, corresponding to the mowing scenario of this embodiment, "the lawn in the cuttable area basically has no missed grass" can indicate that, after the autonomous working apparatus 200 completes one coverage, there is no missed grass in at least 80% of the area of the cuttable area.

Optionally, the path moved by the autonomous working apparatus 200 to complete one coverage of the first working area can also be basically consistent with the path moved by the autonomous working apparatus 100 to complete one traversal of the first working area. As shown in the movement paths in FIG. 2(a) to 2(e), the control circuit planned the boundary path RO1, the path RO2 along the boundary of the non-cuttable area NC1, and the movement paths RO3, RO4, and RO5 in the area between boundary BO1 and non-cuttable area NC1 that still needed to execute the mowing task. After the autonomous working apparatus 200 sequentially completed one mowing operation along movement paths RO1, RO2, RO3, RO4, and RO5, it completed one traversal of the first working area AR1, also completed one coverage of the first working area AR1, and at the same time, completed the mowing task for the first working area AR1.

In some implementations of this embodiment, the working instruction can also include cutting instructions and driving instructions, so that the cutting assembly can perform mowing actions according to the working instruction, and the driving assembly can drive the driving components to drive the moving components to move according to the working instruction, thereby driving the autonomous working apparatus 200 to move.

In some implementations of this embodiment, "switching to a state of waiting to execute the mowing task of the next first working area" can mean that the autonomous working apparatus 200 at least maintains a state of being powered on but not executing mowing tasks. By way of example, the waiting instruction can include different control instructions to make the autonomous working apparatus 200 enter different states. For example, this state can indicate that the autonomous working apparatus 200 enters a standby state, or it can indicate that the autonomous working apparatus 200 enters a state of transferring or preparing to transfer to another site (refer to the definition of this state in the previous embodiment), or it can indicate that the autonomous working apparatus 200 enters a state of executing other tasks (such as watering tasks, leaf blowing tasks) in the current first working area.

In some implementations of this embodiment, the waiting instruction can include a stop operation instruction for the cutting assembly 20, a stop operation instruction or a driving instruction for the driving assembly 30, to make the autonomous working apparatus 100 enter a standby state. Optionally, the waiting instruction can include a stop operation instruction for the cutting assembly 20 and a driving instruction for the driving assembly 30, to make the autonomous working apparatus 100 enter a state of transferring or preparing to transfer to another site. Optionally, the waiting instruction can include a stop operation instruction for the cutting assembly 20, an operation instruction for other working components, and a driving instruction for the driving assembly 30, to make the autonomous working apparatus 100 enter a state of executing other working tasks.

In some implementations of this embodiment, "the autonomous working apparatus 200 switches to a state of waiting to execute the mowing task of the next first working area" can also indicate that, in this state, the control circuit can begin executing the aforementioned lawn mowing control process at any time before or when the autonomous working apparatus 200 reaches the next first working area, so that the autonomous working apparatus 200 can promptly execute the mowing task of the next first working area. This is conducive to ensuring the work continuity of the autonomous working apparatus 200 within a day.

In another embodiment, the autonomous working apparatus 300 includes a housing, a cutting assembly and a driving assembly each connected to the housing, and a control circuit connected to the cutting assembly and the driving assembly. The setup of the components in the driving assembly and cutting assembly and their connection relationship with the housing can refer to the autonomous working apparatus 100, which will not be elaborated here.

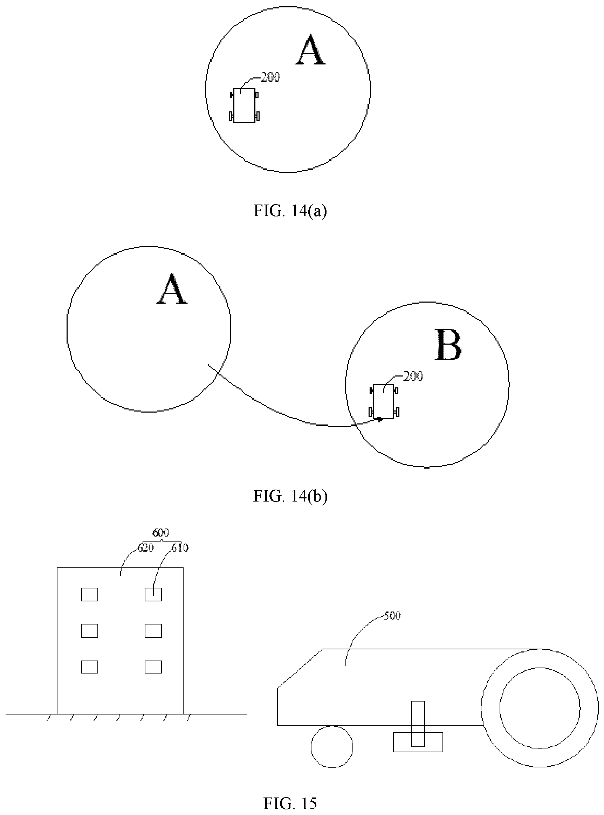

Referring to FIG. 14(a) and 14(b), the difference between the autonomous working apparatus 300 and the autonomous working apparatus 100 lies at least in the lawn mowing control process executed by the control circuit. This lawn mowing control process includes:
P100": Outputting a working instruction to the cutting assembly and the driving assembly to control the autonomous working apparatus 300 to enter working area A to execute a mowing task, and marking the map data of working area A as active (shown with solid lines).
P200": After detecting completion of one coverage of working area A, outputting a working instruction to the cutting assembly and the driving assembly to control the autonomous working apparatus 300 to enter working area B to execute a mowing task, and marking the map data of working area B as active, and removing or marking the map data of working area A as inactive (shown with dashed lines); wherein the average working efficiency of the autonomous working apparatus 300 to complete the mowing tasks of working area A and working area B is 10 min-40 min per thousand square meters.

In some implementations of this embodiment, when the autonomous working apparatus 300 drives into working area A, it can automatically activate the map of working area A (for example, marking the map data of working area A as active), so that it can execute the mowing task in working area A based on the map data of working area A. When the autonomous working apparatus 300 leaves working area A and enters working area B to work, it can similarly automatically activate the map of working area B (for example, marking the map data of working area B as active), so that it can execute the mowing task in working area B based on the map data of working area B. At the same time, the autonomous working apparatus 300 can deactivate the map data of working area A (for example, removing or marking the map data of working area A as inactive) to avoid program running errors when multiple maps coexist, and also to reduce the memory usage of the working apparatus 300. The completion of one coverage of working area A can refer to the description of completing one coverage by the autonomous working apparatus 200 mentioned earlier, which will not be elaborated here.

In some implementations of this embodiment, the average working efficiency of the autonomous working apparatus 300 to complete the mowing tasks of working area A and working area B is 10 min-40 min per thousand square meters. Optionally, the average working efficiency of the autonomous working apparatus 300 can be expressed as the mean value of the working efficiency of the autonomous working apparatus 300 to complete the mowing task of working area A and the working efficiency of the autonomous working apparatus 300 to complete the mowing task of working area B. Optionally, when the working area is a relatively narrow and long area with fewer turning scenarios, under general working conditions, the average working efficiency of the autonomous working apparatus 300 can be about 10min per thousand square meters. With the increase in the number of turns and/or the increase in the overlap width of adjacent path strips, the average working efficiency will also decrease, for example, it can be about 20 min per thousand square meters, or about 30 min per thousand square meters, or about 40 min per thousand square meters. Therefore, under general working conditions, the average working efficiency of the autonomous working apparatus 300 for areas that are not particularly narrow and long is basically 10 min-40 min per thousand square meters.

By way of example, if the area of working area A is 500 m², and the autonomous working apparatus 300 takes 20 min to complete the mowing task, then the corresponding working efficiency is 20 min/500 m², which is approximately 40min per thousand square meters. If the area of working area B is 250 m², and the autonomous working apparatus 300 takes 8 min to complete the mowing task, then the corresponding working efficiency is 7.5 min/250 m², which is approximately 30 min per thousand square meters. Therefore, the average working efficiency of the autonomous working apparatus 300 is approximately 35min per thousand square meters. By controlling the average working efficiency of the autonomous working apparatus 300 in different working areas to meet the above range, it is conducive to balancing the working efficiency and working quality of commercial lawn mowers, thereby further ensuring the implementation of the working characteristics of commercial lawn mowers to mow immediately upon entry and leave immediately after mowing.

In some implementations of this embodiment, the autonomous working apparatus 300 also includes a sensor assembly, which is configured to collect information and generate positioning data for indicating the position information of the autonomous working apparatus 300. The lawn mowing control process also includes: outputting a working instruction to the cutting assembly and the driving assembly based at least on the map data of the working area and the positioning data to control the autonomous working apparatus 300 to execute the mowing task in the working area with a regular path.

Optionally, the regular path is configured to make the coverage rate of the autonomous working apparatus 300 greater than or equal to 50%; the driving assembly is configured to make the movement rate of the autonomous working apparatus 300 range from 0.5 m/s to 5 m/s; the cutting assembly is configured to make the actual cutting width of the autonomous working apparatus 300 not less than 500 mm. Through these settings, it is conducive for the autonomous working apparatus 300 to execute mowing tasks with optimal working efficiency in different working scenarios while ensuring the mowing quality of the autonomous working apparatus 300, achieving the goal of leaving immediately after mowing.

Optionally, the regular path is configured to make the coverage rate of the autonomous working apparatus 300 greater than or equal to 60%; the driving assembly is configured to make the movement rate of the autonomous working apparatus 300 range from 1m/s to 3 m/s; the cutting assembly is configured to make the actual cutting width of the autonomous working apparatus 300 range from 560 mm to 800 mm. Through these settings, it is conducive to better balance the working efficiency and working quality of the autonomous working apparatus 300, achieving efficient cutting and leaving immediately after mowing for the autonomous working apparatus 300.

In some implementations of this embodiment, the working instruction can also include cutting instructions and driving instructions, so that the cutting assembly can perform mowing actions according to the working instruction, and the driving assembly can drive the driving components to drive the moving components to move according to the working instruction, thereby driving the autonomous working apparatus 300 to move.

In another embodiment, the autonomous working apparatus 400 includes a housing, a cutting assembly and a driving assembly each connected to the housing, and a control circuit connected to the cutting assembly and the driving assembly. The setup of the components in the driving assembly and cutting assembly and their connection relationship with the housing can refer to the autonomous working apparatus 100, which will not be elaborated here.

The difference between the autonomous working apparatus 400 and the autonomous working apparatus 100 lies at least in the lawn mowing control process executed by the control circuit. This lawn mowing control process includes:
P100‴: Obtaining map data of each first working area for an intended mowing task.
P200‴: Planning a movement path of the autonomous working apparatus 400 in each first working area based at least on the map data, and outputting a working instruction to the driving assembly and the cutting assembly to control the autonomous working apparatus 400 to execute mowing tasks in multiple independent first working areas; wherein each mowing task includes: autonomously traversing the current first working area along the planned movement path and performing single-pass mowing, wherein the single-pass mowing is achieved through simultaneously mulching or collecting grass during mowing; switching to a state of moving or preparing to move toward the next first working area after completing the traversal of the current first working area; wherein each mowing task is charged separately based at least on the map data of the current first working area.

In this way, work can be carried out in the first working area after confirming the required fee with each household (achieving billing per household), which is conducive to the realization of commercial team revenue. At the same time, when the autonomous working apparatus 400 works, it can achieve the cutting effect of immediate mowing upon entry and leaving immediately after mowing, meeting the working requirements of a high-efficiency commercial lawn mower, thereby helping to improve customer satisfaction.

In some implementations of this embodiment, the fee for the mowing task can be determined based on the area of the current first working area. For example, the user can input the area information of the current first working area in the terminal, and the terminal or the backend server can determine the receivable fee for each household based on this area information. Optionally, the fee for the mowing task can also be further determined based on the number of sub-areas in the first working area, the grass condition, and the customized needs of the customer. For example, the user can also input the number of sub-areas in the current first working area, the grass condition, and customized need information in the terminal, and the terminal or the backend server can determine the receivable fee for each household based on this information.

In some implementations of this embodiment, the working instruction can also include cutting instructions and driving instructions, so that the cutting assembly can perform mowing actions according to the working instruction, and the driving assembly can drive the driving components to drive the moving components to move according to the working instruction, thereby driving the autonomous working apparatus 400 to move.

In another embodiment, an autonomous working system is provided. Referring to FIG. 15, this autonomous working system includes an autonomous working apparatus 500 and an external power source component 600. The autonomous working apparatus 500 includes a housing, a cutting assembly and a driving assembly each connected to the housing, and a control circuit connected to the cutting assembly and the driving assembly. The setup of the components in the driving assembly and cutting assembly and their connection relationship with the housing can refer to the autonomous working apparatus 100, which will not be elaborated here.

The difference between the autonomous working apparatus 500 and the autonomous working apparatus 100 lies at least in the lawn mowing control process executed by the control circuit. This lawn mowing control process includes:
P100ʺʺ: Obtaining map data of each first working area for an intended mowing task.
P200ʺʺ: Planning a movement path of the autonomous working apparatus 400 in each first working area based at least on the map data, and outputting a working instruction to the driving assembly and the cutting assembly to control the autonomous working apparatus 400 to execute mowing tasks in multiple independent first working areas; wherein each mowing task includes: autonomously traversing the current first working area along the planned movement path and performing single-pass mowing, wherein the single-pass mowing is achieved through simultaneously mulching or collecting grass during mowing; switching to a state of moving or preparing to move toward the next first working area after completing the traversal of the current first working area.

On the other hand, the external power source component 600 is configured to be coupled with the autonomous working apparatus 500 to provide at least power support for the autonomous working apparatus 500 to execute the mowing task.

In some implementations of this embodiment, the working instruction can also include cutting instructions and driving instructions, so that the cutting assembly can perform mowing actions according to the working instruction, and the driving assembly can drive the driving components to drive the moving components to move according to the working instruction, thereby driving the autonomous working apparatus 500 to move.

In some implementations of this embodiment, "providing at least power support for the autonomous working apparatus 500 to execute the mowing task" can mean that the external power source component 600 couples with the autonomous working apparatus 500 to charge it when the current remaining power of the autonomous working apparatus 500 is lower than the power required for the working task of the current first working area or lower than the power required for the working tasks of the remaining first working areas within the day. Optionally, the external power source component 600 can be an accessory that is relatively independent of the autonomous working apparatus 500. This accessory can be attached to the autonomous working apparatus 500, or it can be carried by the transport vehicle after being separated from the autonomous working apparatus 500, or it can be carried by the transport vehicle separately as an independent accessory that is not attached to the autonomous working apparatus 500.

In some implementations of this embodiment, a charging interface is set up on the autonomous working apparatus 500, and a discharging interface is set up on the external power source component 600. Energy transfer can be achieved through wire connection or plate contact between the charging and discharging interfaces. Optionally, a discharging interface can also be set up on the autonomous working apparatus 500, and a charging interface can also be set up on the external power source component 600, so that the autonomous working apparatus 500 can be coupled with the external power source component 600 to charge the external power source component 600. Optionally, the charging and discharging interfaces of the autonomous working apparatus 500 can be set up independently or integrated, and the charging and discharging interfaces of the external power source component 600 can also be set up independently or integrated. When the charging and discharging interfaces of the autonomous working apparatus 500 and/or the external power source component 600 are integrated, both can have charging and discharging modes (for example, an internal charging and discharging switching circuit can be set up) to enable the corresponding charging/discharging function in the corresponding mode.

Through the external power source component 600 providing at least power support for the autonomous working apparatus 500 to execute the mowing task, the charging frequency of the power supply component of the autonomous working apparatus within a day can be reduced, which is conducive to maintaining a continuous work rhythm for the autonomous working apparatus 500 in a day, ensuring the implementation of its working characteristics of immediate mowing upon entry and leaving immediately after mowing.

In some implementations of this embodiment, the preset power of the external power source component 600 can be determined based at least on the power demand corresponding to the average number of lawns worked per day in the area responsible by the commercial team. For example, if the number of lawns worked per day in the area responsible by the commercial team from Monday to Sunday in a week is 4, 5, 5, 3, 5, 4, 5 respectively, then the average number of lawns worked per day can be expressed as (4+5+5+3+5+4+5)/7=4. This average can be taken as 4, and the preset power of the external power source component 600 can be set as the working power corresponding to 4 lawns of 500 m² each. If this average cannot be divided evenly, for example, if it's 4.5, then the preset power of the external power source component 600 can be set as the working power corresponding to 5 lawns of 500 m² each. Optionally, the preset power of the external power source component 600 can also be taken as the product of the working power corresponding to the average number of lawns and a coefficient, where the coefficient can be 0.5, 0.6, 0.7, 0.8, 0.9, 1, 1.1, 1.2, 1.3, 1.4, 1.5.

Optionally, the external power source component 600 can also provide power support for the autonomous working apparatus 500 to execute other types of working tasks (such as watering, leaf blowing) within a day.

In some implementations of this embodiment, the autonomous working apparatus 500 is configured to store an amount of power less than or equal to 15 kWh, and/or the external power source component 600 is configured to store an amount of power less than or equal to 15 kWh. Traditional gasoline-driven commercial lawn mowers often have high power consumption. Through storing less than 15 kWh of power respectively, the autonomous working apparatus 500 and the external power source component 600 of this embodiment can basically meet the electricity demand for mowing by the autonomous working apparatus 500 within a day. Optionally, the stored power of the autonomous working apparatus 500 can be 3 kWh, 4 kWh, 5 kWh, 6 kWh, 7 kWh, 8 kWh, 9 kWh, 10 kWh, 12 kWh, 14 kWh, 15 kWh, and the stored power of the external power source component 600 can be 3 kWh, 4 kWh, 5 kWh, 6 kWh, 7 kWh, 8 kWh, 9 kWh, 10 kWh, 12 kWh, 14 kWh, 15 kWh.

Optionally, the autonomous working apparatus 500 is configured to store an amount of power less than or equal to 10 kWh, and/or the external power source component 600 is configured to store an amount of power less than or equal to 10 kWh. The autonomous working apparatus 500 of this embodiment can shred grass without creating airflow, which helps reduce the power consumption of the autonomous working apparatus 500. Therefore, setting the stored power below 10 kWh respectively can also basically meet the electricity demand for mowing by the autonomous working apparatus 500 within a day, which is also conducive to reducing the cost of the autonomous working system.

In some implementations of this embodiment, referring to FIG. 15, the external power source component 600 includes a first energy storage unit 610 and a second energy storage unit 620 that can transfer energy between each other. Optionally, the first energy storage unit 610 and the second energy storage unit 620 are independent of each other, but can supplement energy to the other when one's power is insufficient. Optionally, both the first energy storage unit 610 and the second energy storage unit 620 can individually couple with the autonomous working apparatus 500 to supply power to the autonomous working apparatus 500. Optionally, the autonomous working apparatus 500 can also be configured to couple with the second energy storage unit 620 to charge the second energy storage unit 620. Optionally, the first energy storage unit 610 can be a portable energy storage unit (such as a backpack battery, battery pack), and the second energy storage unit 620 can be a larger capacity energy storage unit (such as an energy cabinet). This approach is conducive to achieving greater freedom of energy transfer between the autonomous working apparatus 500 and the external power source component 600, making the power supply method of the autonomous working apparatus 500 more flexible, thereby better ensuring the power supply for the autonomous working apparatus 500 to execute working tasks within a day.

In some implementations of this embodiment, the control circuit of the autonomous working apparatus 500 is also configured to: determine the power required for mowing the current first working area based on the map data of the current first working area; provide the power required for mowing to a determination process, wherein the determination process is used to determine whether the current remaining power of the autonomous working apparatus 500 is greater than or equal to the power required for mowing; if the determination result is no, output prompt information to remind the user to charge the autonomous working apparatus 500 through the external power source component 600. In this way, the autonomous working apparatus 500 can receive sufficient power support, so that it can complete the working task of the first working area basically without interruption, which is conducive to the implementation of the efficient working characteristics of the autonomous working apparatus 500 to mow immediately upon entry and leave immediately after mowing.

Optionally, a prompting component (such as an alarm light, sound alarm, etc.) can be set up on the autonomous working apparatus 500 to remind the user after the control circuit outputs prompt information. Optionally, prompt information can be sent to the user's terminal through the communication component on the autonomous working apparatus 500 based on the prompt information to remind the user. Optionally, a charging reminder can also be displayed on the interactive component (such as a display panel) of the autonomous working apparatus 500 based on the prompt information.

The autonomous working apparatus in the above embodiments can work autonomously on lawns and has a one-time maintenance effect (such as maintaining the lawn at a frequency of at least 1-2 weeks), thereby replacing traditional riding mowers that require human control and saving labor costs. It can also autonomously obtain the customer's lawn map and immediately perform mowing operations after entering the customer's lawn, having excellent work continuity, which is conducive to improving work efficiency. It can also plan appropriate movement paths according to the map of the lawn to be mowed, so that even after completing one traversal, it can have a high coverage rate, which is conducive to improving cutting quality, and can also reduce subsequent supplementary cutting operations, both improving efficiency and further saving costs. At the same time, it can also perform single-pass mowing during traversal, so that after the traversal is completed, the grass surface can be flat and beautiful without basically needing secondary processing of grass clippings, improving work efficiency and further saving labor costs. On the other hand, the autonomous working apparatus with the working characteristics of immediate mowing upon entry and leaving immediately after mowing is conducive to improving the evaluation and order processing capacity of commercial teams, thereby enabling commercial teams to continuously visit more users for mowing in one day, improving team effectiveness.

Below, in conjunction with the drawings, using the autonomous working apparatus 100 as an example, some implementations that can be optionally used by the autonomous working apparatus in the above embodiments will be provided.

In some implementations, referring to FIG. 1, since the sensor assembly 50 in the autonomous working apparatus 100 can include positioning data for indicating the position information of the autonomous working apparatus 100 and environmental data reflecting the environment in which the autonomous working apparatus 100 is located when executing the mowing task, the control circuit 40 can be configured to: detect whether the autonomous working apparatus 100 encounters a preset event based on the environmental data; if the preset event is detected, record the position area where the autonomous working apparatus encounters the preset event based on the positioning data; when detecting that the autonomous working apparatus completes an initial traversal of the first working area along the planned movement path, plan a supplementary mowing path for the autonomous working apparatus based on the recorded position area and the current positioning data of the autonomous working apparatus; output a third instruction to the driving assembly and the cutting assembly to control the autonomous working apparatus to return to the recorded position area along the supplementary mowing path to execute the mowing task until the traversal of the first working area is completed. Through this method, the unexpected situations encountered by the autonomous working apparatus 100 during the execution of the mowing task can be effectively handled, thereby ensuring the completion of the traversal of the first working area by the autonomous working apparatus 100.

Optionally, referring to FIG. 6, when the autonomous working apparatus 100 completes the initial traversal of the first working area AR1, it has recorded a total of four position areas A, B, C, and D where preset events were encountered. Thus, the control circuit 40 can plan a supplementary mowing path for the autonomous working apparatus 100 to return to areas A, B, C, and D for supplementary mowing based on the current positioning data of the autonomous working apparatus 100 and these four position areas. For example, as shown in FIG. 6, the control circuit 40 can sequentially plan a supplementary mowing path from the current position to A, B, C, and D. It can be understood that the control circuit 40 can also plan a supplementary mowing path from the current position to D, C, B, and A. This embodiment does not restrict the order of supplementary mowing for A, B, C, and D. When the autonomous working apparatus 100 completes the supplementary mowing operations for the four position areas A, B, C, and D, the traversal of the first working area AR1 is correspondingly completed, and the control circuit 40 outputs a second instruction to the driving assembly 30 and the cutting assembly 20 to control the autonomous working apparatus 100 to switch to a state of waiting to execute the mowing task of the next first working area.

Optionally, the third instruction can include a driving instruction for the driving assembly 30 and an operation instruction for the cutting assembly 20 to maintain the operation of the cutting assembly 20 during the supplementary mowing movement, thereby avoiding multiple starts and stops of the cutting assembly 20, which is conducive to extending the service life of the autonomous working apparatus 100. Optionally, the third instruction can include a driving instruction for the driving assembly 30 and a stop operation instruction for the cutting assembly 20 to control the cutting assembly 20 to stop operating during the supplementary mowing movement, which is conducive to saving energy consumption and preventing over-cutting of the lawn.

Optionally, the preset event can include encountering an obstacle, encountering a shadow area, encountering ground depression, or a combination of these, wherein the shadow area can indicate an area where the positioning signal of the autonomous working apparatus 100 is poor (leading to low positioning accuracy of the autonomous working apparatus 100). Since the preset events encountered by the autonomous working apparatus 100 are usually temporary, when obstacles are removed, signal blockage in the shadow area is eliminated, or ground depressions are filled, the autonomous working apparatus 100 can re-execute the mowing task in the position area where the preset event was encountered.

Optionally, when the autonomous working apparatus 100 encounters a preset event, it can continue executing the mowing task by either detouring and returning to the originally planned path or turning around and re-planning the path.

In some implementations, referring to FIG. 1, the control circuit 40 is also configured to: output the third instruction to the driving assembly 30 and the cutting assembly 20, and mark the position area to indicate that the position area is a non-cuttable area when the preset event is detected again in the recorded position area; continue moving along the supplementary mowing path to the next recorded position area, and output the second instruction to the driving assembly 30 and the cutting assembly 20 when detecting that the autonomous working apparatus 100 completes the traversal of each recorded position area.

Although the preset events encountered by the autonomous working apparatus 100 are usually temporary, there may also be situations where obstacles, shadow areas, or ground depressions are not promptly removed. If these situations continue to exist when returning for supplementary mowing, making the autonomous working apparatus 100 wait for a second supplementary mowing, it will inevitably affect the work efficiency of the commercial team on that day. Therefore, through this method, the autonomous working apparatus 100 can determine the position area where the preset event is encountered again as a non-cuttable area (for example, it can assign a "non-cuttable" mark or attribute to the data of that position area), and move to the next recorded position area, thereby improving work efficiency and facilitating the traversal of recorded position areas by the autonomous working apparatus 100.

Optionally, referring to FIG. 1, the control circuit 40 is also configured to: output the third instruction to the driving assembly 30 and the cutting assembly 20, and output the second instruction to the driving assembly 30 and the cutting assembly 20 when detecting that the total missed cutting area of the cuttable area is less than or equal to a first area threshold, and the missed cutting area of each remaining recorded position is less than or equal to a second area threshold.

Since the mowing operation was not executed in the recorded position areas during the initial traversal of the autonomous working apparatus 100, these recorded position areas become missed cutting areas in the cuttable area. Each missed cutting area corresponds to a certain area, and the sum of the areas of these missed cutting areas becomes the total missed cutting area of the cuttable area. When there are many pedestrians, movable obstacles, and small animals in the first working area, it is easy to have many missed cutting areas. If each missed cutting area is traversed one by one, it will also affect the work efficiency of the commercial team. Therefore, during the supplementary mowing process, it can simultaneously check whether the total missed cutting area of the cuttable area is less than or equal to a first area threshold (for example, setting the first area threshold to 5 m²), and whether the missed cutting area of each remaining recorded position is all less than or equal to a second area threshold (for example, setting the first area threshold to 0.5 m²), to determine when to complete the supplementary mowing operation. Through this method, it can avoid the autonomous working apparatus 100 spending too much time on supplementary mowing operations, thereby helping to balance the working quality and working efficiency of commercial lawn mowers.

Optionally, referring to FIG. 1, the control circuit 40 is also configured to: grid the map of the first working area based on the map data of the first working area; determine the first mapping position of the autonomous working apparatus 100 on the gridded map of the first working area based on the positioning data; determine the second mapping position of the endpoint of the path for completing the initial traversal by the autonomous working apparatus on the gridded map of the first working area based on the data of the planned movement path; determine whether the autonomous working apparatus has completed the initial traversal of the first working area based on the positional relationship between the first mapping position and the second mapping position.

Optionally, the path for completing the initial traversal can be expressed as the movement path for executing the mowing task by the autonomous working apparatus 100 before performing the supplementary mowing operation. By detecting whether the autonomous working apparatus 100 has moved to the endpoint of the path for completing the initial traversal, it can be determined whether the autonomous working apparatus 100 has completed the initial traversal of the first working area. Optionally, after gridding the map of the first working area, the grid position (the second mapping position) corresponding to the endpoint of the path when the autonomous working apparatus 100 completes the initial traversal can be determined based on the data of the planned movement path. On the other hand, the grid position (the first mapping position) corresponding to the autonomous working apparatus 100 on the gridded map of the first working area can be determined based on the positioning data of the autonomous working apparatus 100. By comparing the positional relationship between the first mapping position and the second mapping position, it can be determined whether the autonomous working apparatus 100 has completed the initial traversal of the first working area. For example, when it is detected that the first mapping position coincides with the second mapping position, it can be determined that the autonomous working apparatus 100 has completed the initial traversal. Optionally, the first mapping position can take the position of the cutting assembly 20 of the autonomous working apparatus 100 on the map of the first working area. When it is detected that the position of the cutting assembly 20 on the map of the first working area is mostly or entirely within the grid corresponding to the second mapping position, it can also be determined that the autonomous working apparatus 100 has reached the endpoint of the path for completing the initial traversal.

In some implementations, the control circuit 40 is also configured to: plan a global movement path for the autonomous working apparatus 100 in the first working area based on the map data of the first working area. This approach is conducive to avoiding multiple path planning operations during the execution of the mowing task, ensuring the work continuity of the autonomous working apparatus 100.

Optionally, taking the first working area AR1 shown in FIG. 2 as an example, the autonomous working apparatus 100 can plan a global boustrophedon path in the first working area AR1, and after the planning is completed, it can mow along the global boustrophedon path. Optionally, taking the first working area AR2 shown in FIG. 3 as an example, the autonomous working apparatus 100 can plan a global rectangular spiral path in the first working area AR2, and after the planning is completed, it can mow along the global rectangular spiral path.

In some implementations, the control circuit 40 is also configured to: partition the map of the first working area based on the map data of the first working area; plan the sectional movement path for the autonomous working apparatus 100 in each partition based on the partitioning result. Partitioning the map of the first working area and planning the sectional movement path for the autonomous working apparatus 100 in each partition can effectively reduce the computational power demand for path planning of the autonomous working apparatus 100.

In some implementations, after planning the movement path for one partition, the control circuit 40 can first control the autonomous working apparatus 100 to execute the mowing task along the planned movement path in that partition, then proceed to the next partition, continue planning the movement path for the next partition, and so on, until the mowing tasks for all partitions are completed. This approach is conducive to reducing the memory demand for storing path data of the autonomous working apparatus 100, while also ensuring the work continuity of the autonomous working apparatus 100 to a certain extent.

In some implementations, the control circuit 40 can also be configured to: plan a straight-line path based on the map data of the first working area and the positioning data of the autonomous working apparatus 100, and after reaching the endpoint of this straight-line path, continue to plan the next straight-line path based on the map data of the first working area and the positioning data of the autonomous working apparatus 100, forming a segmented type of path through this cycle until the traversal of the first working area is completed. The data of each straight-line path in the segmented type of path is less compared to the global movement path or the sectional movement path, which is conducive to further reducing the memory demand for the autonomous working apparatus 100, making it easier to adapt to the storage capabilities of existing commercial lawn mowing robots.

In some implementations, the autonomous working apparatus 100 can plan its movement path in the first working area through its positioning data and the map data of the first working area. For example, after planning a more efficient movement path based on the map data of the first working area, the autonomous working apparatus 100 can move to the starting point of this more efficient movement path based on its current positioning to start executing the mowing task. For another example, when executing the mowing tasks of various partitions of the first working area, after planning the movement path of the next partition based on the map data of the first working area, the autonomous working apparatus 100 can move to the starting point of the movement path of the next partition based on its current positioning to start executing the mowing task of the next partition. For yet another example, when executing the mowing task through segmented path planning, the autonomous working apparatus 100 can plan each segmented straight-line path based on its current positioning and the target points determined by the map data of the first working area.

It should be noted that the embodiments of this application do not limit the method of obtaining position information of the autonomous working apparatus 100. By way of example, the position information of the apparatus can be obtained using one or more of the following positioning technologies: GPS technology, Visual Simultaneous Localization And Mapping (VSLAM) technology, Inertial Measurement Unit (IMU) technology, Real-Time Kinematic (RTK) positioning technology, network RTK (NRTK) positioning technology, undifferenced network RTK (URTK) positioning technology, precise point positioning RTK (PPP-RTK) positioning technology, etc.

As a specific example, position information can be obtained by positioning using GPS technology. As another specific example, position information can be obtained by positioning using a fusion of GPS technology, VSLAM technology, and IMU technology. As another specific example, NRTK technology can send correction data to the autonomous working apparatus 100 through a server to correct its observation value errors, thereby achieving high-precision positioning of the autonomous working apparatus 100 in a wide area; URTK technology and PPP-RTK technology can send correction data to the autonomous working apparatus 100 through a server to correct the state quantity errors related to the satellite signal transmission environment, thereby achieving high-precision positioning of the autonomous working apparatus 100 in a wide area. Optionally, state quantity errors can be obtained by decomposing observation value errors. Optionally, state quantity errors can include satellite orbit, satellite clock bias, satellite phase deviation, ionospheric delay, tropospheric delay, etc.

Optionally, the sensor assembly 50 includes at least some of the sensors corresponding to the above positioning technologies. Optionally, the sensors corresponding to the above positioning technologies can be partially set in the sensor assembly 50, or all set in the sensor assembly 50.

In some implementations, the control circuit 40 is configured to execute one or more of the following path planning processes:
(1) Planning a first mowing path for the autonomous working apparatus 100 to move along the boundary of the first working area based on the positioning data and the map data of the first working area.

For example, as shown in FIG. 2(a), the autonomous working apparatus 100 can first plan a path to move to the boundary BO1 based on its current positioning and the boundary BO1 of the first working area AR1, then plan a boundary cutting path RO1 based on the boundary BO1.

(2) Planning a second mowing path for the autonomous working apparatus to move along the island boundary in the first working area based on the positioning data and the map data of the first working area.

For example, as shown in FIG. 2(b), the autonomous working apparatus 100 can first plan a path to move to the vicinity of the island boundary (non-cuttable area NC1) based on its current positioning and the position of the island, then plan a path RO2 for cutting along the island boundary based on the island boundary.

(3) Planning a regular third mowing path based on the positioning data and the map data of the first working area to control the autonomous working apparatus to traverse the area to be mowed between the boundary of the first working area and the island boundary.

For example, as shown in FIG. 2(c) to 2(e), the autonomous working apparatus 100 can first plan a path to move to the starting point of the planned boustrophedon path based on current positioning and the starting point of the planned boustrophedon path, then plan paths RO3, RO4, and RO5 that can cover the area to be mowed between the boundary of the first working area and the island boundary based on the boundary of the first working area and the island boundary.

In some implementations, the autonomous working apparatus 100 can retrieve the map data of the first working area matching its position information from a memory based on its positioning data.

Optionally, the first working area matching the position information of the autonomous working apparatus 100 can include: a first working area within a certain distance from the current position of the autonomous working apparatus 100. This certain distance can be determined by the user according to actual needs, for example, it can be one of 30 m, 50 m, 100 m, 200 m, 500 m, 800 m, 1 km, 1.5 km, or 2 km. The autonomous working apparatus 100 can retrieve the map data of the first working area matching its position information from the memory based on its positioning data, and can autonomously enter that first working area to execute the mowing task, which is conducive to improving the work continuity of the autonomous working apparatus 100 and improving work efficiency.

In some implementations, the sensor assembly 50 can be configured to: generate original positioning data for indicating approximate position information of the autonomous working apparatus; receive correction data sent by a server; generate the positioning data by correcting the original positioning data according to the correction data. This is conducive to ensuring that the positioning data of the autonomous working apparatus 100 has high precision even in a wide area. Optionally, the range referred to by "wide area", quantitatively speaking, can be an area with a diameter of 5 km, 10 km, 20 km, or more.

Since traditional GPS positioning technology is susceptible to atmospheric interference and has low positioning accuracy, autonomous working apparatus often require further positioning correction. For example, correction can be made by sending correction data, which can specifically be correction of observation value errors or correction of state quantity errors related to satellite signals. Optionally, the positioning data of the autonomous working apparatus 100 can be obtained using NRTK, URTK, or PPP-RTK. These positioning technologies are all wide-area high-precision positioning technologies, which do not require a separate base station for each autonomous working apparatus 100, but instead send correction data through a server after networking. This is not only conducive to ensuring high-precision positioning of the autonomous working apparatus 100 in a wide area, but also simplifying the usage steps of the autonomous working apparatus 100, thereby improving user satisfaction.

Specifically, when a commercial team arrives near the lawn of customer A with the autonomous working apparatus 100, the autonomous working apparatus 100 can retrieve the map data of customer A's lawn that matches its position information from a memory based on its current positioning data. After the autonomous working apparatus 100 completes the mowing task of customer A's lawn, the commercial team can take the autonomous working apparatus 100 to the next lawn awaiting a mowing task (such as customer B's lawn). When the autonomous working apparatus 100 arrives near customer B's lawn, it can similarly retrieve the map data of customer B's lawn that matches its position information from the memory based on its current positioning data, and then execute the mowing task on customer B's lawn. This process continues until the commercial team completes the mowing tasks for all customers' lawns in the daily work order with the autonomous working apparatus 100. Thus, the higher the accuracy of the positioning data of the autonomous working apparatus 100, the more conducive it is for the autonomous working apparatus 100 to accurately retrieve the required lawn maps in different areas (even if customers A and B are far apart from each other), thereby ensuring the work efficiency of the autonomous working apparatus 100 within a day.

On the other hand, to ensure that the autonomous working apparatus 100 can work immediately upon entering different first working areas, in some implementations, the positioning data of the autonomous working apparatus 100 can also meet the following requirements:
(1) The coordinate system of the current positioning data of the autonomous working apparatus 100 and the coordinate system of the map data of the first working area where the autonomous working apparatus 100 is about to work or is currently working have the same format.

Optionally, "same format" can mean that both coordinate systems are absolute coordinate systems or both are relative coordinate systems. Among them, an absolute coordinate system can be a latitude and longitude coordinate system used to represent world coordinates, and a relative coordinate system can be a coordinate system determined after selecting a reference near the current first working area, for example, it can be a coordinate system established by selecting any preset position (charging station position, garden sign, garden entrance, etc.) as the origin.

(2) The coordinate system of the current positioning data of the autonomous working apparatus 100 and the coordinate systems of the map data of different working areas in the memory all have a consistent format.

In this way, the positioning data of the autonomous working apparatus 100 can be adapted to the coordinate system of the map of the current first working area. In other words, regardless of which area the autonomous working apparatus 100 is located in, it can effectively move and work based on the map of the first working area currently being used, thereby completing operations such as autonomous entry, autonomous exit, and autonomous in-field mowing, saving manual operation time, and greatly improving the convenience, efficiency, and reliability of operations.

Optionally, the coordinate systems of the map data of different working areas in the memory have a consistent format. This facilitates the coordinate system of the positioning data of the autonomous working apparatus 100 to have the same format as the coordinate systems of the map data of different working areas preset in the memory, which is conducive to adapting the positioning data of the autonomous working apparatus 100 to the coordinate systems of maps of different working areas in the memory, enabling the autonomous working apparatus 100 to efficiently execute entry, exit, and mowing operations, further saving working time and reducing costs.

In some implementations, the control circuit 40 is also configured to: obtain interface information associated with the first working area; retrieve the map data of the first working area matching the interface information from the memory according to the interface information. Through the interface information associated with the first working area, the autonomous working apparatus 100 can quickly search and determine which set of map data of the first working area the autonomous working apparatus 100 is about to execute the mowing task on. This is conducive to reducing the selection time for the first working area and improving the work efficiency of the autonomous working apparatus 100.

Optionally, this interface information can be the identity information of the owner of the first working area (such as name, ID number, driver's license number, social security number, etc.), or communication information (such as phone number, email address, etc.). Optionally, this interface information can also be the address information of the first working area or user-defined sequence information (such as sequence information defined by the user for the first working area according to the mapping order, etc.).

In some implementations, the control circuit 40 is also configured to: retrieve the map data of the first working area matching the scheduling information of the autonomous working apparatus from the memory according to preset scheduling data for indicating the scheduling information of the autonomous working apparatus; or, receive the map data of the first working area sent by a server based on the scheduling information of the autonomous working apparatus, wherein the memory is set in the server. This is conducive to reducing the selection time for the first working area and improving the work efficiency of the autonomous working apparatus 100.

Optionally, the scheduling data for indicating the scheduling information of the autonomous working apparatus 100 can be work order data for the autonomous working apparatus 100 to execute mowing tasks in different first working areas within a day, for example, it can indicate the following information:
10:00 am First working area 1
11:30 am First working area 2
13:00 pm First working area 3

The autonomous working apparatus 100 can sequentially retrieve the map data of the corresponding first working areas from the memory according to the work order, thereby completing the mowing tasks of the corresponding first working areas. Optionally, such work order data can also be preset in a remote server, and the remote server can sequentially send the map data of the corresponding first working areas to the autonomous working apparatus 100 according to the work order. After receiving the map data, the autonomous working apparatus 100 can execute the mowing task of the corresponding first working area.

In some implementations, the work order data can be generated by the server based on previous mowing data. For example, for lawns with a lower grass height (for example, lower than a general set value) from the previous mowing, even if it's their turn to be mowed this time, they can be arranged in the work orders for the next few days when determining the current work order, meaning they won't be mowed this time. For lawns with a higher grass height (for example, greater than or equal to a general set value) from the previous mowing, even if it's not their turn to be mowed this time, they can be arranged in the current work order when determining the current work order, meaning they will be mowed first this time. For another example, for lawns with a higher (denser) cutting load recorded from the previous mowing, when determining the current work order, the working time for the next lawn area to be cut can be arranged a bit later, so that the moving speed can be appropriately reduced to cut this denser lawn, thereby ensuring the cutting quality of this denser lawn. Through these methods, the cutting schedules of different lawns can be coordinated according to the actual situation, which is not only conducive to improving the work efficiency of the commercial team, but also improving user satisfaction.

In some implementations, the time for the autonomous working apparatus 100 to receive the map data of the first working area can be less than or equal to a predetermined value, for example, it can be less than or equal to 3 s, 5 s, 7 s, 8 s, 10 s. This is conducive to shortening the transmission time of the map data of the first working area, thereby improving the work efficiency of the autonomous working apparatus 100.

In some implementations, the second instruction can include various different types of instructions.

For example, to ensure the safety of the autonomous working apparatus 100 for users, the second instruction can include a stop cutting instruction and/or a raising instruction to control the cutting assembly 20 to stop operation and/or raise to a safety height. This safety height can be the maximum raising height of the cutting assembly 20.

For example, also to ensure the safety of the autonomous working apparatus 100 for users, the second instruction can include a stop operation instruction for the driving assembly 30 to control the autonomous working apparatus 100 to stop moving.

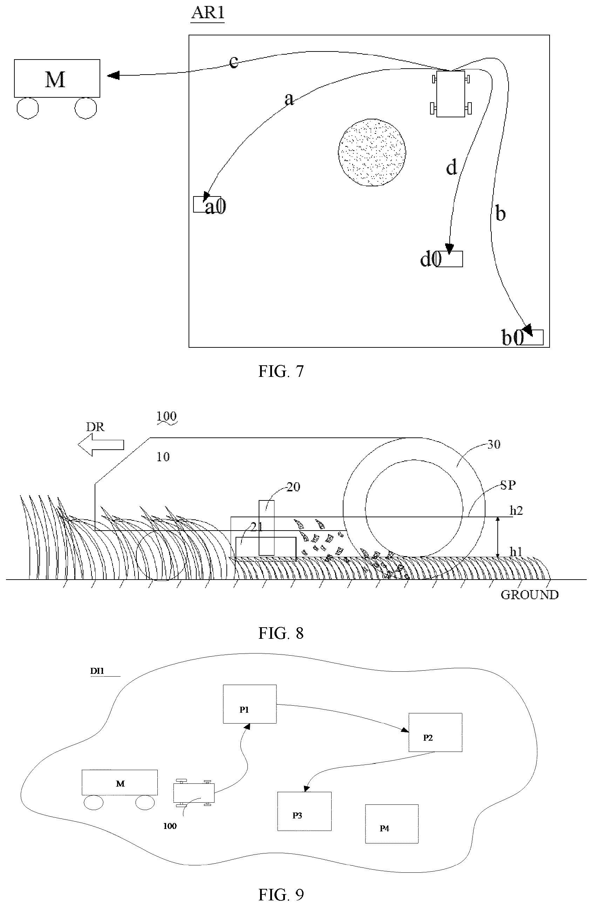

For example, to facilitate the autonomous working apparatus 100 to start the next lawn mowing control process, the second instruction can also include a driving instruction for the driving assembly 30 to drive the autonomous working apparatus 100 to move to a predetermined area, which facilitates starting the next lawn mowing control process. Optionally, as shown in FIG. 7, the predetermined area can be the position area a0 where the autonomous working apparatus 100 enters the first working area, or the starting point area b0 of the planned movement path of the autonomous working apparatus 100. After completing the mowing task of the current first working area, the autonomous working apparatus 100 can move to area a0 or area b0 along path a or path b, to facilitate the autonomous working apparatus 100 to automatically leave the first working area. Optionally, as shown in FIG. 7, when the next first working area is located around the current first working area, the predetermined area can also be the starting point area d0 where the autonomous working apparatus 100 enters the next first working area. After completing the mowing task of the current first working area, the autonomous working apparatus 100 can move to area d0 along path d, to facilitate the autonomous working apparatus 100 to enter the adjacent next first working area. Optionally, as shown in FIG. 7, the predetermined area can be the vehicle compartment area M of the vehicle for transporting the autonomous working apparatus 100. After completing the mowing task of the current first working area AR1, the autonomous working apparatus 100 can move to the vehicle compartment area M of the transport vehicle along path c, to facilitate the autonomous working apparatus 100 to go to the next area to execute the mowing task via the transport vehicle.

In some implementations, referring to FIG. 1, the autonomous working apparatus 100 also includes a power supply assembly 60 connected to the control circuit, configured to store a preset amount of power to supply power to the autonomous working apparatus 100; the control circuit 40 is also configured to: determine the power required for mowing the current first working area based on the map data of the current first working area; provide the power required for mowing to a determination process, wherein the determination process is used to determine whether the current remaining power of the power supply assembly 60 is greater than or equal to the power required for mowing; if the determination result is yes, output the first instruction to the driving assembly 30 and the cutting assembly 20. By real-time detection of the current remaining power of the power supply assembly 60, it can be ensured that the autonomous working apparatus 100 always has sufficient power to complete the work of the first working area without interruption, thereby ensuring the work efficiency of the autonomous working apparatus 100.

Optionally, the control circuit 40 is also configured to: output the second instruction to the power supply assembly 60 to control the autonomous working apparatus 100 to enter a low power state, which includes a standby state. To avoid unnecessary energy consumption by the autonomous working apparatus 100 while waiting to execute the mowing task of the next first working area, the power supply assembly 60 can control the output current and/or output voltage magnitude to make the autonomous working apparatus 100 enter/prepare to enter a low power state (such as standby state) after completing the mowing task of the first working area, thereby reducing energy consumption to a lower level and extending the usage time and lifespan of the battery of the autonomous working apparatus 100. For example, as shown in FIG. 7, after the autonomous working apparatus 100 completes the mowing task of the current first working area AR1, the power supply assembly 60 can either make the autonomous working apparatus 100 enter a low power state at the current position of the autonomous working apparatus 100, or enter a low power state after the autonomous working apparatus 100 moves to area a0, area b0, area c0, or vehicle compartment area M.

In some implementations, the control circuit 40 is also configured to: obtain mowing parameter data of the first working area; output the first instruction to the driving assembly 30 and the cutting assembly 20 according to the mowing parameter data. When executing the mowing task of the first working area, by obtaining the mowing parameters of the first working area in advance, the autonomous working apparatus 100 can better ensure its working quality while also effectively controlling its work efficiency.

In some implementations, through big data summary analysis of the mowing information recorded during previous mowing tasks, at least part of the mowing parameter data for the current mowing task of the first working area can be sent to the autonomous working apparatus 100 using an external server (such as a cloud server) before the autonomous working apparatus 100 executes the mowing task.

In some implementations, the mowing parameters of the first working area can also be input by the user before the autonomous working apparatus 100 executes the mowing task.

Optionally, the mowing parameters can include the cutting height of the autonomous working apparatus 100. By obtaining the cutting height of the first working area in advance, it is conducive to trimming the lawn of the first working area to an appropriate height, ensuring the maintenance quality of the lawn. Optionally, the cutting height can also be set according to user requirements.

Optionally, the mowing parameters can include the movement rate of the autonomous working apparatus 100. By obtaining the movement rate of the autonomous working apparatus 100 in the first working area in advance, it is conducive to improving the working quality and efficiency of the autonomous working apparatus 100 in completing the mowing task of the first working area. Optionally, the movement rate can be set by the user or adjusted during the mowing process according to the cutting load of the autonomous working apparatus 100. For example, for dense grass areas, the movement rate can be set lower, and for sparse grass areas, the movement rate can be set higher.

Optionally, the movement rate at which the driving assembly 30 drives the autonomous working apparatus 100 to move according to the first instruction ranges from 0.5 m/s to 5 m/s. For example, the movement rate can be 0.5 m/s, 0.8 m/s, 1 m/s, 1.5 m/s, 2 m/s, 2.5 m/s, 3 m/s, 3.5 m/s, 4 m/s, 4.5 m/s, 5 m/s. By controlling the range of movement rate to meet the above relationship, it is conducive to balancing the safety and work efficiency of the autonomous working apparatus 100.

Optionally, the mowing parameters can include the driving power of the autonomous working apparatus 100. By obtaining the driving power of the autonomous working apparatus 100 in the first working area in advance, it is conducive to controlling the magnitude of the movement rate of the autonomous working apparatus 100 when executing the mowing task.

Optionally, the mowing parameters can include the power consumption of the autonomous working apparatus 100. Optionally, power consumption can include the driving power consumption of the driving assembly 30, as well as the driving power consumption of the cutting assembly 20. Among them, the driving power of the driving assembly 30 can control the magnitude of the movement rate of the autonomous working apparatus 100, and the driving power of the cutting assembly 20 can control the magnitude of the cutting rotation speed of the cutting assembly 20. By controlling the magnitude of the cutting rotation speed, it is conducive to optimizing the missed cutting situation of the autonomous working apparatus 100 and the flatness of the lawn cutting. Thus, by obtaining the power consumption of the autonomous working apparatus 100 in advance, it is conducive to making the autonomous working apparatus 100 move at a suitable movement rate and cut at a suitable cutting rotation speed, ensuring the maintenance quality and efficiency of the lawn.

Optionally, the mowing parameters can include the cutting load of the autonomous working apparatus 100, which is conducive to the autonomous working apparatus 100 executing the mowing task in the first working area at a suitable cutting rotation speed and movement rate.

Optionally, the mowing parameters can include the spacing between adjacent cutting strips of the autonomous working apparatus 100. Typically, when the autonomous working apparatus 100 is mowing, as it moves, it forms rectangular cutting strips in the first working area. By obtaining the spacing between two adjacent cutting strips in advance, it is conducive to the autonomous working apparatus 100 executing the mowing task with a suitable cutting path, which is conducive to ensuring the coverage rate of the autonomous working apparatus 100 for the first working area, thereby balancing the maintenance quality and efficiency of the lawn.

Optionally, the cutting assembly 20 is configured such that the cutting width of the autonomous working apparatus 100 ranges from 500 mm to 1000 mm. For example, the cutting width range can be 500 mm, 550 mm, 650 mm, 750 mm, 850 mm, 950 mm, 1000 mm. Optionally, to ensure that the working rate of the autonomous working apparatus 100 is 1000 m²/30 min, the cutting width should be set to not less than 500mm. On the other hand, the passage doors of American and European users' front and back yards are usually 36 inches to 42 inches. Therefore, to facilitate the autonomous working apparatus 100 passing through passage doors, the cutting width of the cutting assembly 20 can be set to less than 1000 mm (corresponding to a 42-inch passage door). Thus, by controlling the range of the cutting width of the cutting assembly 20 to meet the above relationship, it is conducive to balancing the work efficiency of the autonomous working apparatus 100 and its passage ability when moving.

Optionally, the mowing parameters can include the overlap ratio of adjacent cutting strips of the autonomous working apparatus 100. By obtaining the overlap ratio of adjacent cutting strips in advance, it is conducive to the autonomous working apparatus 100 executing the mowing task with a suitable cutting path, which is conducive to further ensuring the coverage rate of the autonomous working apparatus 100 for the first working area, thereby better improving the missed cutting situation of the autonomous working apparatus 100.

In some implementations, the control circuit 40 is also configured to: output an adjustment instruction to the driving assembly 30 and/or the cutting assembly 20 according to the sensor data generated by the sensor assembly 50 and the mowing parameter data to control the current mowing parameters of the autonomous working apparatus 100 to meet the conditions or range indicated by the mowing parameter data.

When the autonomous working apparatus 100 executes mowing tasks, its mowing parameters will change due to the influence of temporary obstacles, shadow areas, etc. in the first working area. In response to this, the control component 40 can output adjustment instructions to the driving assembly 30 and/or cutting assembly 20 to control the current mowing parameters of the autonomous working apparatus 100 to meet the conditions or range indicated by the mowing parameter data. In other words, the expected mowing parameter data can first be preset in the autonomous working apparatus 100, and then the autonomous working apparatus 100 can detect the current mowing parameters in real-time during the execution of the mowing task, and execute corresponding actions through adjustment instructions to the driving assembly 30 and/or cutting assembly 20, to make the current mowing parameters of the autonomous working apparatus 100 meet the conditions or range indicated by the expected mowing parameter data. This approach is conducive to the autonomous working apparatus 100 responding to unexpected situations during mowing, thereby ensuring the maintenance quality and efficiency of the lawn.

In some implementations, the mowing parameter data is included in the data package of the map data of the first working area provided by the memory. In other words, the mowing parameter data can be obtained by the autonomous working apparatus 100 synchronously with the map data of the first working area. Through this method, the autonomous working apparatus 100 can receive both the map data of the first working area and the mowing data of the first working area with one reception action, which is convenient and quick.

In some implementations, the control circuit 40 is also configured to: receive user input of confirmation information about starting the cutting assembly 20, and output the first instruction to the cutting assembly 20. When the grass height of the lawn in the first working area is greater than a predetermined value, some grass clippings formed by the cutting assembly 20 will be longer and fall on the lawn surface, affecting the appearance of the lawn. Thus, after the autonomous working apparatus 100 completes one traversal, the user can assess whether it is necessary to cut part or all of the first working area again. If needed, the user can input confirmation information for cutting again to start the cutting assembly 20 to cut again. Optionally, scenarios where the grass height of the lawn is greater than a predetermined value include scenarios such as cutting the first batch of tall grass in spring or cases where the user has not trimmed the lawn for a long time.

In some implementations, the mowing task of the first working area includes a mulching task, and the cutting assembly 20 includes a mulching assembly. Optionally, the mulching assembly can cut the grass to be trimmed into pieces while mowing, so that the formed grass clippings can fall into the grass, rather than obviously covering the grass surface, affecting the appearance of the lawn. For example, about 90% of the grass clippings formed by the mulching assembly of this embodiment have a length less than or equal to 20 mm. For another example, about 90% of the grass clippings formed by the mulching assembly of this embodiment have a length less than or equal to 15 mm. In this way, the autonomous working apparatus 100 can relatively well complete the lawn maintenance work by completing one traversal of the first working area along the planned movement path, and basically does not need to cut repeatedly for a second or multiple times, which is conducive to better balancing the working quality and efficiency of autonomous mowing devices in the commercial field.

In some implementations, referring to the autonomous working apparatus 100 shown in FIG. 8, the cutting assembly 20 includes a mulching assembly 21. When this autonomous working apparatus 100 moves in the DR direction for mowing, based on the operation of the mulching assembly 21, it can form a mulching space SP with variable length within a predetermined height range of h1~h2. The mulching assembly 21 is configured to cut the grass in the mulching space SP multiple times. As shown in FIG. 8, the length change direction of the mulching space SP is consistent with the moving direction DR of the autonomous working apparatus 100, and the lowest point of the mulching space SP is higher than the surface of the working area. From FIG. 8, it can be seen that the grass in the mulching space SP has basically been cut multiple times by the mulching assembly 21, forming flying grass clippings that fall into the grass. Optionally, the lowest point of the mulching space SP is not lower than the lowest point of the mulching assembly 21, which is conducive to ensuring that the grass in the mulching space SP is cut multiple times by the mulching assembly 21.

In some specific implementations, the mulching assembly 21 can blow up the cut grass by forming an upward airflow, so that when this part of the grass falls, it is cut again by the cutting elements of the mulching assembly, ultimately forming fine grass clippings. For example, the mulching assembly 21 can include a rotating shaft and cutting blades with flanges connected to the rotating shaft. In the above specific implementation, since the cut grass will be blown up by the upward airflow, the top edge of the mulching space SP will be higher than the top of the cutting elements. In other words, the height from the ground corresponding to h2 can be higher than the height of the cutting elements from the ground.

In some specific implementations, the mulching assembly 21 can cut the grass by forming multiple cutting trajectories at different heights. For example, the mulching assembly can include a rotating shaft and multiple cutting blades connected to the rotating shaft and located at different height positions. For another example, the mulching assembly can include a rotating shaft, a blade disc connected to the rotating shaft, and cutting blades set at different installation heights on the blade disc. The blade disc can rotate with the rotating shaft, thereby driving the blades to rotate, and thus completing the mulching task. Optionally, the installation phase of adjacent layer blades on the blade disc can be different. Further optionally, during mowing, in a single rotation cycle of the blade disc, blades at adjacent layers and adjacent phases can cut the grass at the same position respectively. In some other specific implementations, the mulching assembly 21 can cut the grass by forming multiple cutting trajectories at different heights, and the lowest point of the mulching space SP is not lower than the lowest point of any cutting trajectory, which is conducive to further ensuring that the grass in the mulching space SP is cut multiple times by the mulching assembly 21. In the above specific implementation, the bottom edge and top edge of the mulching space SP can basically coincide with the movement trajectories of the bottom cutting blades and top cutting blades respectively. In other words, the height from the ground corresponding to h1 can be basically consistent with the height of the bottom cutting blades from the ground, and the height from the ground corresponding to h2 can be basically consistent with the height of the top cutting blades from the ground.

In some other implementations, the autonomous working apparatus 100 can also include a grass collection assembly working in cooperation with the cutting assembly 20. The grass collection assembly can suck the cut grass into a collection box while the cutting assembly is cutting the grass, and the collection box can be emptied when full. Through this method, the grass clippings formed by cutting can be basically sucked away, and will not obviously remain on the grass surface, thereby ensuring the beauty of the lawn.

In some implementations, the control circuit 40 can also be configured to execute the following lawn mowing control process:
P10: Obtaining a first map data set of a first region for an intended mowing task, wherein the first map data set includes map data of at least one first working area for an intended mowing task, and the first map data set is provided by the memory.

Referring to FIG. 9, when the autonomous working apparatus 100 is transported to the first region DI1 by a transport vehicle, it can first obtain the first map data set of the first region DI1. It can be seen that the first region DI1 has three first working areas P1, P2, and P3 that need to execute mowing tasks, and also has a second working area P4 that does not need to execute mowing tasks on the current day. Thus, the first map data set can include map data of the four working areas P1, P2, P3, and P4.

Optionally, when obtaining the first map data set, the map data in the first map data set can be filtered to retain the map data of the first working areas for intended mowing tasks. For example, the first map data set originally obtained by the autonomous working apparatus 100 can include map data of the four working areas P1, P2, P3, and P4, but the first map data set after filtering by the autonomous working apparatus 100 can include map data of the three first working areas P1, P2, and P3.

Optionally, when obtaining the first map data set, it can also only obtain the map data of the first working areas for intended working tasks, thus forming a map data set that only has the map data of the first working areas for intended mowing tasks. For example, the first map data set originally obtained by the autonomous working apparatus 100 can only include map data of the three first working areas P1, P2, and P3.

Optionally, the range of the first region DI1 can be predetermined by the user. For example, areas where working areas are more clustered can be defined as the first region; a working area that is far from other working areas can also be separately defined as a first region; the region can also be divided into multiple sub-regions according to the satellite map of the region, where sub-regions with first working areas can be represented as the first region, and sub-regions without first working areas can be represented as the second region.

Optionally, the range of the first region DI1 can also be defined according to the map data acquisition range of the autonomous working apparatus 100. For example, when the autonomous working apparatus 100 is transported to the first region DI1 by a transport vehicle, the autonomous working apparatus 100 can obtain the map data of working areas within a predetermined range, thus this predetermined range becomes the range of the first region DI1.

Optionally, in the first region, the number of first working areas can be 1, 2, 3, 4, etc. This implementation does not impose any restrictions on this.

P20: Outputting a fourth instruction to the driving assembly and the cutting assembly to control the autonomous working apparatus to move to each first working area indicated by the first map data set to execute the mowing task until the mowing task of each first working area is completed.

Referring to FIG. 9, the control circuit 40 can output the fourth instruction to the driving assembly 30 and the cutting assembly 20 to control the autonomous working apparatus 100 to move to each first working area indicated by the first map data set to execute the mowing task until the mowing task of each first working area is completed.

Optionally, continuing to refer to FIG. 9, after leaving the vehicle compartment area M, the autonomous working apparatus 100 can move to the first working areas P1, P2, and P3 in sequence to execute mowing tasks. For example, the autonomous working apparatus 100 can first go to the first working area P1 to execute the mowing task. After the autonomous working apparatus 100 completes the mowing task of the first working area P1, it can go to the first working area P2 to execute the mowing task. After the autonomous working apparatus 100 completes the mowing task of the first working area P2, it can go to the first working area P3 to execute the mowing task. After the autonomous working apparatus 100 completes the mowing task of the first working area P3, it completes the mowing task of the first region DI1.

Optionally, the autonomous working apparatus 100 can determine the working order based on the numerical order or scheduling order of the first working areas P1, P2, and P3. It can also determine the working order of the first working areas P1, P2, and P3 based on the distance to the first working areas P1, P2, and P3. For example, if the first working area P3 is closest to the autonomous working apparatus 100, then the autonomous working apparatus 100 can first go to the first working area P3 to work, then go to the first working area P1 to work, and finally go to the first working area P2 to work. This implementation does not impose any restrictions on the execution order of mowing for the first working areas in the first region.

P30: Outputting a fifth instruction to the driving assembly and the cutting assembly to control the autonomous working apparatus to switch to a state of moving or preparing to move toward a next first region.

When the autonomous working apparatus 100 is in a state of waiting to execute the mowing task of the next first region, the control circuit 40 can execute the aforementioned lawn mowing control process at any time before or when the autonomous working apparatus 100 reaches the next first region, to control the autonomous working apparatus 100 to promptly execute the mowing task of the next first region, which is conducive to ensuring the work continuity of the autonomous working apparatus 100.

Optionally, the specific instruction content of the fifth instruction can be basically consistent with that of the second instruction, which will not be elaborated here.

By obtaining the map data of various first working areas in the first region in a package, it is conducive to shortening the map matching time between neighboring first working areas, ensuring the work continuity of the autonomous working apparatus 100 in the first region. Furthermore, in the commercial field, it can improve the work efficiency of the autonomous working apparatus 100 while ensuring work quality.

In some implementations, referring to FIG. 1, the autonomous working apparatus 100 also includes an interactive component 70, electrically connected to the control circuit 40, configured to interact with a user; the control circuit 40 is also configured to: control the interactive component 70 to display a selection set for the user to select the first working area to proceed to currently according to the first map data set; receive confirmation information of the first working area to proceed to currently input by the user based on the selection set; output the fourth instruction to control the autonomous working apparatus 100 to move to that first working area to execute the mowing task.

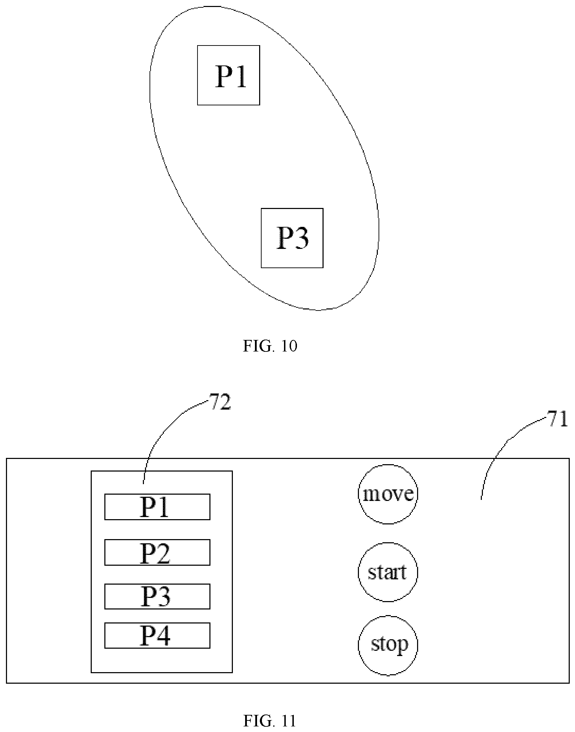

Referring to FIG. 9, the first map data set of the first region DI1 may contain map data of multiple first working areas, so a user can select one first working area as the working area to proceed to currently. Referring to FIG. 11, the interactive component 70 has a display interface 71, which can be used to display a selection set 72 for the user to select the first working area to proceed to currently. The selection set 72 can display the working areas P1, P2, P3, and P4 of the first region. After the user selects one of the first working areas (for example, P1), they can press the "move" button to make the autonomous working apparatus 100 proceed to the first working area P1 to work.

Through this method, the user can control the order in which the autonomous working apparatus 100 covers various first working areas according to the actual situation of the first region DI1, enhancing the flexibility of the autonomous working apparatus 100 working in the first region DI1.

Optionally, after the autonomous working apparatus 100 completes the work in the first working area P1, the user can continue to select the next first working area (for example, P2) in the selection set 72, then press the "move" button to make the autonomous working apparatus 100 proceed to the first working area P2 to work. Of course, after the autonomous working apparatus 100 completes the work in the first working area P1, it can also autonomously proceed to the next first working area P2 to work.

In some implementations, the first map data set is generated based on the position information of the autonomous working apparatus 100. For example, according to the satellite map of the region, the region can be divided into multiple sub-regions, where sub-regions with first working areas can be represented as the first region. Based on the position information of the autonomous working apparatus 100, it can be determined which first region the autonomous working apparatus 100 is located in, and then the first map data set of that first region can be generated based on the map data of various first working areas in that first region. For another example, the distance from the autonomous working apparatus 100 can be determined based on the position information of the autonomous working apparatus 100, so the first map data set can include the map data of first working areas whose distance from the autonomous working apparatus 100 is less than or equal to a distance threshold. Optionally, this distance threshold can be one of 30 m, 50 m, 100 m, 200 m, 500 m, 800 m, 1 km, 1.5 km, 2 km.

In some implementations, the first map data set also includes map data of multiple first working areas belonging to the same household. Optionally, as shown in FIG. 10, the map data of the first working areas P1 and P3 can belong to the same household. Thus, when the autonomous working apparatus 100 completes the mowing task of the first working area P1, it can proceed on its own to the next first working area P3 of the current household to execute the mowing task, to more quickly and efficiently complete the task order of the current household.

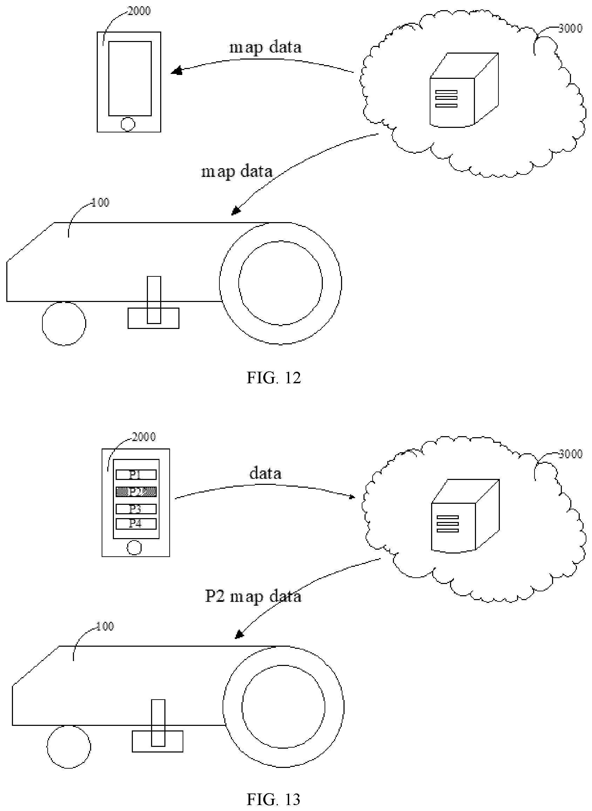

Embodiments of the present application also provide an autonomous working system. As shown in FIG. 12, this autonomous working system includes the autonomous working apparatus as described in any of the previous embodiments, as well as a terminal 2000 and a server 3000. This embodiment will be explained using the autonomous working apparatus 100 as an example.

Among them, the server 3000 has a memory and can be configured to provide the map data of the first working area to the autonomous working apparatus 100 and/or the terminal 2000 when the autonomous working apparatus 100 executes the mowing task. For example, the server 3000 can provide only the map data of the first working area to the autonomous working apparatus 100 and/or the terminal 2000; for another example, the server 3000 can provide the first map data set of the first region for intended mowing tasks to the autonomous working apparatus 100 and/or the terminal 2000, where the first map data set includes map data of at least one first working area; for yet another example, the server 3000 can provide the map data of working areas that meet predetermined distance conditions/scheduling conditions to the autonomous working apparatus 100 and/or the terminal 2000.

The terminal 2000 is communicatively connected with the autonomous working apparatus 100 and can send and receive information with the server 3000 and the autonomous working apparatus 100. In some implementations, the terminal 2000 can send map data, mowing parameter data, etc. to the autonomous working apparatus 100. In other implementations, the terminal 2000 can receive map data sent by the server 3000 and send the map data of the working area to proceed to work to the autonomous working apparatus 100. In yet other implementations, the autonomous working apparatus 100 can also first send the map data of the working area to proceed to work to the server 3000, which then sends it to the terminal 2000.

Optionally, this server can be a virtual server, and the corresponding memory can be mounted on this virtual server through cloud storage technology (for example, in the form of cloud drives). Of course, the server can also be a local server, and the corresponding memory can be a local memory, for example, it can be the memory in the autonomous working apparatus 100, or the memory in a charging station, etc.

The above autonomous working system enables the autonomous working apparatus 100 to obtain the map data of lawns to be mowed, thereby enabling the autonomous working apparatus 100 to complete the traversal of various first working areas, efficiently and quickly complete mowing tasks, and improve work efficiency.

In some implementations, referring to FIG. 13, the terminal 2000 can be configured to: display a selection set including the first working area to be selected by the user; receive confirmation information of the first working area to proceed to currently input by the user based on the selection set to send a map transmission instruction to the server 3000; the server 3000 is configured to: send the map data of the first working area indicated by the map transmission instruction to the autonomous working apparatus 100 according to the map transmission instruction.

Before the autonomous working apparatus 100 starts executing the mowing task, the terminal 2000 can first display the selection set of various working areas in the first region DI1. As shown in FIG. 13, the selection icons of various working areas P1, P2, P3, and P4 are displayed on the interface of the terminal 2000. After the user selects working area P2 as the working area to proceed to work currently, the terminal 2000 can send the corresponding map transmission instruction to the server 3000. After receiving the map transmission instruction, the server 3000 can retrieve the corresponding map data of the first working area P2 from the memory and send this map data to the autonomous working apparatus 100.

Optionally, before the autonomous working apparatus 100 starts executing the mowing task, the terminal 2000 can also receive a collection of map data meeting predetermined conditions sent by the server 3000. This collection of map data includes map data of at least one first working area for intended mowing tasks. Then, the terminal 2000 can display the selection set of various working areas in the first region DI1 according to this collection of map data for the user to select. Optionally, the selection set can extract part of the data from the map data to display icons, approximate outlines, etc., of various working areas. Optionally, the server 3000 can also only send the aforementioned partial data to the terminal 2000 to display icons, approximate outlines, etc., of various working areas. Optionally, before the autonomous working apparatus 100 starts executing the mowing task, the terminal 2000 can also receive information for marking map data attributes or sequences sent by the server 3000 to display icons, approximate outlines, etc., of various working areas.

Optionally, after the user makes a selection, the terminal 2000 can directly send the map data of the first working area selected by the user to the autonomous working apparatus 100. Optionally, after the user makes a selection, the terminal 2000 can send a map transmission instruction to the server 3000, and then the server 3000 can retrieve and send the corresponding map data of the first working area to the autonomous working apparatus 100 according to the map transmission instruction.

In some implementations, the autonomous working apparatus 100 is configured to: obtain real-time map data of the current first working area; send the real-time map data to the terminal 2000 via the server 3000; the terminal 2000 is configured to: display a map of the current first working area according to the real-time map data. Through this method, the terminal 2000 can display the map of the current first working area in real-time. When there are temporary non-cuttable obstacles, they can also be promptly displayed on the terminal 2000 to remind team users to go and check, which is conducive to promptly removing mowing obstacles and ensuring the cutting coverage of the first working area.

It should be understood that in the embodiments disclosed in this application, "Y corresponding to X" means that Y is associated with X, and Y can be determined according to X. However, it should also be understood that determining Y according to X does not mean that Y is determined solely according to X; Y can also be determined according to X and/or other information.

It should be understood that the term "and/or" in this document is merely a description of the associative relationship of associated objects, indicating that three relationships can exist. For example, X and/or Y can indicate three situations: X exists alone, X and Y exist simultaneously, and Y exists alone. Additionally, the character "/" in this document generally indicates that the associated objects before and after are in an "or" relationship.

It should be understood that in various embodiments of this disclosure, the size of the serial numbers of the above processes does not imply the order of execution. The execution order of each process should be determined by its function and inherent logic, and should not constitute any limitation on the implementation process of the embodiments of this disclosure.

It should be understood that units described as separate components may or may not be physically separate, and components displayed as units may or may not be physical units, that is, they may be located in one place, or they may be distributed across multiple network units. Some or all of the units can be selected to achieve the purpose of the embodiment solutions according to actual needs. Additionally, in various embodiments of this application, the functional units can be integrated into one processing unit, or they can physically exist separately, or two or more units can be integrated into one unit.

In the embodiments disclosed in this application, the terms "first", "second" are only used for descriptive purposes and cannot be understood as indicating or implying relative importance or implicitly indicating the number of technical features indicated. Thus, features defined with "first", "second" can explicitly or implicitly include at least one such feature. In the description of this invention, "multiple" means at least two, for example, two, three, etc., unless there is another explicit specific limitation.

In the embodiments disclosed in this application, unless otherwise explicitly stipulated and limited, the terms "installed", "connected", "coupled", "fixed", etc., should be broadly understood. For example, it can be a fixed connection, or it can be a detachable connection, or an integral formation; it can be a mechanical connection, or it can be an electrical connection; it can be directly connected, or it can be indirectly connected through an intermediate medium, or it can be the internal communication of two elements or the interaction relationship between two elements. For ordinary technicians in the field, the specific meaning of the above terms in this invention can be understood according to specific situations.

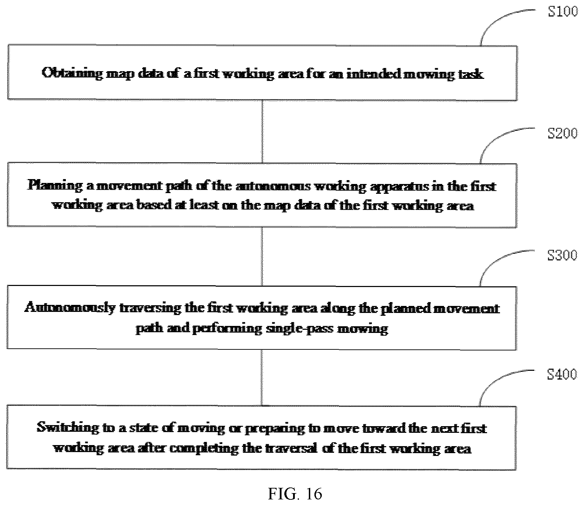

Embodiments of the present application also provide a working method of an autonomous working apparatus. Below, in conjunction with FIG. 16, the method embodiments of the present application will be described in detail. It should be understood that the method embodiments can correspond to the apparatus embodiments described earlier, so parts not described in detail in the method embodiments can refer to the previous apparatus embodiments. Additionally, the method embodiments introduced below can be implemented by any of the apparatuses mentioned above.

FIG. 16 is a schematic diagram of a working method of an autonomous working apparatus according to an embodiment of the present application. The method can specifically include:
S100: Obtaining map data of a first working area for an intended mowing task, wherein the map data of the first working area is provided by a memory that pre-stores map data of different working areas;
S200: Planning a movement path of the autonomous working apparatus in the first working area based at least on the map data of the first working area;
S300: Autonomously traversing the first working area along the planned movement path and performing single-pass mowing; wherein the single-pass mowing is achieved through simultaneously mulching or collecting grass during mowing;
S400: Switching to a state of moving or preparing to move toward the next first working area after completing the traversal of the first working area.

In some implementations, the map data of the first working area includes boundary data of the first working area and position data of at least a portion of non-cuttable areas in the first working area, and the method also includes: planning the movement path in the first working area based at least on the boundary data of the first working area and the position data of at least a portion of non-cuttable areas.

In some implementations, the method also includes: planning a global movement path in the first working area based at least on the map data of the first working area.

In some implementations, the method also includes: partitioning the map of the first working area based on the map data of the first working area; planning the sectional movement path in each partition based on the partitioning result.

In some implementations, the autonomous working apparatus also includes a sensor assembly, configured to generate sensor data based on collected information, wherein the sensor data includes positioning data for indicating the position information of the autonomous working apparatus; the method also includes: planning the movement path in the first working area based at least on the positioning data and the map data of the first working area.

In some implementations, the method also includes: planning a first mowing path for moving along the boundary of the first working area based at least on the positioning data and the map data of the first working area; planning a second mowing path for moving along the island boundary in the first working area based at least on the positioning data and the map data of the first working area; planning a regular third mowing path based at least on the positioning data and the map data of the first working area to cover the area to be mowed between the boundary of the first working area and the island boundary.

In some implementations, the third mowing path comprises a composite of one or more of a boustrophedon path, a rectangular spiral path, and a spiral path.

In some implementations, the autonomous working apparatus also includes a sensor assembly, configured to generate sensor data based on collected information, wherein the sensor data includes positioning data for indicating the position information of the autonomous working apparatus; the method also includes: retrieving the map data of the first working area matching the position information of the autonomous working apparatus from the memory based on the positioning data.

In some implementations, the sensor assembly is configured to generate the positioning data through NRTK positioning technology, URTK technology, or PPP-RTK positioning technology.

In some implementations, the coordinate system of the current positioning data of the autonomous working apparatus and the coordinate system of the map data of the first working area where the autonomous working apparatus is about to work or is currently working have the same format.

In some implementations, the method also includes: obtaining interface information associated with the first working area; retrieving the map data of the first working area matching the interface information from the memory according to the interface information; wherein the interface information includes one or more of the following information: the identity information of the owner of the first working area; the communication information of the owner of the first working area; the address information of the first working area; the sequence information of the first working area.

In some implementations, the method also includes: retrieving the map data of the first working area matching the scheduling information of the autonomous working apparatus from the memory according to preset scheduling data for indicating the scheduling information of the autonomous working apparatus; or, receiving the map data of the first working area sent by a server based on the scheduling information of the autonomous working apparatus, wherein the memory is set in the server.

In some implementations, the method also includes: when switching to a state of waiting to execute the mowing task of the next first working area, the cutting assembly of the autonomous working apparatus stops operation and/or raises to a safety height, wherein the safety height includes the maximum raising height of the cutting assembly.

In some implementations, the method also includes: when switching to a state of waiting to execute the mowing task of the next first working area, the driving assembly of the autonomous working apparatus stops operation or drives the autonomous working apparatus to move to a predetermined area; wherein the predetermined area includes at least one of the following areas: the position area where the autonomous working apparatus enters the first working area; the starting point area of the planned movement path of the autonomous working apparatus; the starting point area where the autonomous working apparatus enters the next first working area; the vehicle compartment area of a vehicle for transporting the autonomous working apparatus.

In some implementations, the method also includes: obtaining mowing parameter data of the first working area; executing the mowing task of the first working area along the planned movement path according to the mowing parameter data; wherein the mowing parameter data is generated based on previous mowing record information of the first working area.

In some implementations, the autonomous working apparatus also includes a sensor assembly, configured to generate sensor data based on collected status information of the autonomous working apparatus; the method also includes: adjusting the current mowing parameters to meet the conditions or range indicated by the mowing parameter data according to the sensor data and the mowing parameter data.

In some implementations, the mowing parameter data is obtained by the autonomous working apparatus synchronously with the map data of the first working area.

In some implementations, the mowing parameters include one or more of the following parameters: cutting height of the autonomous working apparatus; movement rate of the autonomous working apparatus; driving power of the autonomous working apparatus; power consumption of the autonomous working apparatus; cutting load of the autonomous working apparatus; spacing between adjacent cutting strips of the autonomous working apparatus; overlap ratio of adjacent cutting strips of the autonomous working apparatus.

In some implementations, the method also includes: receiving user input of confirmation information about starting the cutting assembly; executing the mowing task of the first working area along the planned movement path.

In some implementations, the method also includes: making the range of the movement rate of the autonomous working apparatus executing the mowing task 0.5 m/s to 5 m/s.

In some implementations, the method also includes: making the range of the cutting width of the autonomous working apparatus executing the mowing task 500 mm to 1000 mm.

In some implementations, the method also includes: obtaining a first map data set of a first region for an intended mowing task, wherein the first map data set includes map data of at least one first working area for an intended mowing task, and the first map data set is provided by the memory; moving to each first working area indicated by the first map data set to execute the mowing task until the mowing task of each first working area is completed; switching to a state of waiting to execute the mowing task of the next first region.

In some implementations, the autonomous working apparatus also includes an interactive component, configured to interact with a user; the method also includes: displaying a selection set for the user to select the first working area to proceed to currently according to the first map data set; receiving confirmation information of the first working area to proceed to currently input by the user based on the selection set; moving to that first working area to execute the mowing task.

In some implementations, the first map data set is generated based on the position information of the autonomous working apparatus.

In some implementations, the first map data set includes map data of at least one first working area whose distance from the autonomous working apparatus is less than or equal to a distance threshold.

In some implementations, the first map data set also includes map data of multiple first working areas belonging to the same household.

In the implementation process, each step of the above method can be completed through integrated logic circuits in the controller's hardware or instructions in the form of software. The method for requesting uplink transmission resources disclosed in conjunction with the embodiments of this disclosure can be directly embodied as completed by hardware processors, or completed by a combination of hardware and software modules in the processor. Software modules can be located in random access memory, flash memory, read-only memory, programmable read-only memory, or electrically erasable programmable memory, registers, and other mature storage media in the field. The storage medium is located in the memory, and the controller reads the information in the memory and completes the steps of the above method in conjunction with its hardware. To avoid repetition, a detailed description is not provided here.

In the foregoing implementations, the described methods and systems can be implemented entirely or partially through software, hardware, firmware, or any combination thereof. When implemented using software, it can be implemented entirely or partially in the form of a computer program product. The computer program product includes one or more computer instructions. When the computer program instructions are loaded and executed on a computer, all or part of the processes or functions according to the embodiments of this disclosure are generated. The computer can be a general-purpose computer, a specialized computer, a computer network, or other programmable device. The computer instructions can be stored in a computer-readable storage medium or transmitted from one computer-readable storage medium to another computer-readable storage medium. For example, the computer instructions can be transmitted from one website, computer, server, or data center to another website, computer, server, or data center via wired (such as coaxial cable, optical fiber, digital subscriber line (DSL)) or wireless (such as infrared, radio, microwave, etc.) means. The computer-readable storage medium can be any available medium that a computer can read or a data storage device such as a server, data center, etc., that integrates one or more available media. The available medium can be a magnetic medium (such as a floppy disk, hard disk, magnetic tape), an optical medium (such as a digital video disc (DVD)), or a semiconductor medium (such as a solid-state disk (SSD)), etc.

Therefore, embodiments of the present application also provide a computer-readable storage medium with a computer program stored thereon, which implements the steps of any of the aforementioned methods when the computer program is executed.

Therefore, embodiments of the present application also provide a computer device, comprising: a memory and a processor, wherein the memory stores a computer program; the processor implements the steps of any of the aforementioned methods when executing the computer program.

It should be understood that in the embodiments disclosed in this application, the control circuit can include a processor. The processor can be a general-purpose central processing unit (CPU), a microprocessor, an application-specific integrated circuit (ASIC), or one or more integrated circuits for executing related programs to implement the technical solutions provided by the embodiments of this disclosure.

The storage device (also called memory) in the embodiments of this application can include read-only memory and random access memory, and provide instructions and data to the processor. Part of the processor can also include non-volatile random access memory. For example, the processor can also store device type information.

It should be understood that in the embodiments of this disclosure, the processor can be a central processing unit (CPU). The processor can also be other general-purpose processors, digital signal processors (DSP), application-specific integrated circuits (ASIC), field-programmable gate arrays (FPGA), or other programmable logic devices, discrete gates or transistor logic devices, discrete hardware components, etc. The general-purpose processor can be a microprocessor, or the processor can also be any conventional processor, etc.

The various technical features of the above-described embodiments can be combined in any manner. For the sake of brevity, not all possible combinations of the technical features in the above embodiments have been described. However, as long as these combinations of technical features do not contradict each other, they should be considered as falling within the scope recorded in this specification.

The above-described embodiments only express several implementations of this invention. Their descriptions are relatively specific and detailed, but they should not be understood as limitations on the patent scope of the invention. It should be pointed out that for ordinary technicians in the field, without departing from the concept of this invention, various modifications and improvements can also be made, which all fall within the protection scope of this invention. Therefore, the protection scope of this invention patent should be based on the appended claims.

## Claims

1. An autonomous working apparatus, adapted to perform at least one working task on a surface of a working area, wherein the autonomous working apparatus comprises:
a housing;
a cutting assembly and a driving assembly, each connected to the housing; and,
a control circuit connected to the cutting assembly and the driving assembly;
wherein the control circuit is at least configured to execute a lawn mowing control process, the lawn mowing control process comprising:
obtaining map data of a first working area for an intended mowing task, wherein the map data of the first working area is provided by a memory that pre-stores map data of different working areas;
planning a movement path of the autonomous working apparatus in the first working area based at least on the map data of the first working area, and outputting a first instruction to the cutting assembly and the driving assembly to control the autonomous working apparatus to autonomously traverse the first working area along the planned movement path and perform single-pass mowing in the first working area; wherein the single-pass mowing is achieved through simultaneously mulching or collecting grass during mowing;
outputting a second instruction to the cutting assembly and the driving assembly to control the autonomous working apparatus to switch to a state of moving or preparing to move toward a next first working area after detecting completion of traversal of the first working area.

2. The autonomous working apparatus according to claim 1, wherein the map data of the first working area includes boundary data of the first working area and position data of at least a portion of non-cuttable areas;
wherein the control circuit is configured to:
plan the movement path of the autonomous working apparatus in the first working area based at least on the boundary data of the first working area and the position data of the at least a portion of non-cuttable areas.

3. The autonomous working apparatus according to claim 1, wherein the autonomous working apparatus further comprises:
a sensor assembly, electrically connected to the control circuit, configured to generate sensor data based on collected information;
wherein the sensor data includes positioning data for indicating position information of the autonomous working apparatus, and environmental data reflecting the environment in which the autonomous working apparatus is located;
wherein the control circuit is further configured to:
detect whether the autonomous working apparatus encounters a preset event based on the environmental data;
if the preset event is detected, record the position area where the autonomous working apparatus encounters the preset event based on the positioning data;
plan a supplementary mowing path for the autonomous working apparatus based on the recorded position area and current positioning data of the autonomous working apparatus when detecting that the autonomous working apparatus completes an initial traversal of the first working area along the planned movement path;
output a third instruction to the driving assembly and the cutting assembly to control the autonomous working apparatus to return to the recorded position area along the supplementary mowing path to execute the mowing task until the traversal of the first working area is completed.

4. The autonomous working apparatus according to claim 3, wherein
the control circuit is further configured to:
mark the position area in the map data of the first working area to indicate that the position area is a non-cuttable area when the preset event is detected again in the recorded position area;
continue moving along the supplementary mowing path to the next recorded position area, and output the second instruction to the driving assembly and the cutting assembly when detecting that the autonomous working apparatus completes the traversal of each recorded position area.

5. The autonomous working apparatus according to claim 1, wherein the autonomous working apparatus further comprises:
a sensor assembly, electrically connected to the control circuit, configured to generate sensor data based on collected information, wherein the sensor data includes positioning data for indicating position information of the autonomous working apparatus;
wherein the control circuit is further configured to:
plan the movement path of the autonomous working apparatus in the first working area based at least on the positioning data and the map data of the first working area.

6. The autonomous working apparatus according to claim 5, wherein
the control circuit is further configured to execute one or more of the following path planning processes:
planning a first mowing path for the autonomous working apparatus to move along the boundary of the first working area based at least on the positioning data and the map data of the first working area;
planning a second mowing path for the autonomous working apparatus to move along the island boundary in the first working area based at least on the positioning data and the map data of the first working area;
planning a regular third mowing path based at least on the positioning data and the map data of the first working area to control the autonomous working apparatus to traverse the area to be mowed between the boundary of the first working area and the island boundary.

7. The autonomous working apparatus according to claim 6, wherein the third mowing path comprises a composite of one or more of a boustrophedon path, a rectangular spiral path, and a spiral path.

8. The autonomous working apparatus according to claim 1, wherein the autonomous working apparatus further comprises:
a sensor assembly, electrically connected to the control circuit, configured to generate sensor data based on collected information, wherein the sensor data includes positioning data for indicating position information of the autonomous working apparatus;
wherein the control circuit is further configured to:
retrieve the map data of the first working area matching the position information of the autonomous working apparatus from the memory based on the positioning data.

9. The autonomous working apparatus according to claim 8, wherein
the sensor assembly is configured to:
generate original positioning data for indicating approximate position information of the autonomous working apparatus;
receive correction data sent by a server;
generate the positioning data by correcting the original positioning data according to the correction data.

10. The autonomous working apparatus according to claim 8, wherein the coordinate system of the current positioning data of the autonomous working apparatus and the coordinate system of the map data of the first working area where the autonomous working apparatus is about to work or is currently working have the same format.

11. The autonomous working apparatus according to claim 10, wherein the coordinate systems of the map data of different working areas in the memory have a consistent format.

12. The autonomous working apparatus according to claim **1,** wherein
the control circuit is further configured to:
obtain interface information associated with the first working area;
retrieve the map data of the first working area matching the interface information from the memory according to the interface information;
wherein the interface information includes at least one of the identity information of the owner of the first working area, the communication information of the owner of the first working area, the address information of the first working area, and the sequence information of the first working area.

13. The autonomous working apparatus according to claim 1, wherein
the control circuit is further configured to:
retrieve the map data of the first working area retrieve the scheduling information of the autonomous working apparatus from the memory according to preset scheduling data for indicating the scheduling information of the autonomous working apparatus; or,
receive the map data of the first working area sent by a server based on the scheduling information of the autonomous working apparatus, wherein the memory is set in the server.

14. The autonomous working apparatus according to claim 1, wherein
the cutting assembly stops operation and/or is raised to a safety height according to the second instruction, wherein the safety height includes the maximum raising height of the cutting assembly.

15. The autonomous working apparatus according to claim 1, wherein
the driving assembly stops operation or drives the autonomous working apparatus to move to a predetermined area according to the second instruction;
wherein the predetermined area includes at least one of the following areas:
the position area where the autonomous working apparatus enters the first working area;
the starting point area of the planned movement path of the autonomous working apparatus;
the starting point area where the autonomous working apparatus enters the next first working area;
a pre-set fixed area;
the vehicle compartment area of a vehicle for transporting the autonomous working apparatus.

16. The autonomous working apparatus according to claim 1, wherein
the control circuit is further configured to:
obtain mowing parameter data of the first working area, wherein the mowing parameter data is generated based on previous mowing record information of the first working area;
output the first instruction to the driving assembly and the cutting assembly according to the mowing parameter data.

17. The autonomous working apparatus according to claim 16, wherein the autonomous working apparatus further comprises:
a sensor assembly, electrically connected to the control circuit, configured to generate sensor data based on collected status information of the autonomous working apparatus;
wherein the control circuit is further configured to:
output an adjustment instruction to the driving assembly and/or the cutting assembly according to the sensor data and the mowing parameter data to control the current mowing parameters of the autonomous working apparatus to meet the conditions or range indicated by the mowing parameter data.

18. The autonomous working apparatus according to claim 16, wherein the mowing parameter data is obtained by the autonomous working apparatus synchronously with the map data of the first working area.

19. The autonomous working apparatus according to claim 16, wherein
the mowing parameters include one or more of the following parameters:
cutting height of the autonomous working apparatus;
movement rate of the autonomous working apparatus;
driving power of the autonomous working apparatus;
power consumption of the autonomous working apparatus;
cutting load of the autonomous working apparatus;
spacing between adjacent cutting strips of the autonomous working apparatus;
overlap ratio of adjacent cutting strips of the autonomous working apparatus.

20. The autonomous working apparatus according to claim 1, wherein the movement rate at which the driving assembly drives the autonomous working apparatus to move according to the first instruction ranges from 0.5 m/s to 5 m/s.

21. The autonomous working apparatus according to claim 1, wherein the cutting assembly is configured such that the cutting width of the autonomous working apparatus ranges from 500 mm to 1000 mm.

22. The autonomous working apparatus according to claim 1, wherein
the control circuit is further configured to:
obtain a first map data set of a first region for an intended mowing task, wherein the first map data set includes map data of the first working area for at least one intended mowing task, and the first map data set is provided by the memory;
output a fourth instruction to the driving assembly and the cutting assembly to control the autonomous working apparatus to move to each first working area indicated by the first map data set to execute the mowing task until the mowing task of each first working area is completed;
output a fifth instruction to the driving assembly and the cutting assembly to control the autonomous working apparatus to switch to a state of moving or preparing to move toward a next first region.

23. The autonomous working apparatus according to claim 22, wherein the autonomous working apparatus further comprises:
an interactive component, electrically connected to the control circuit, configured to interact with a user;
wherein the control circuit is further configured to:
control the interactive component to display a selection set for the user to select the first working area to proceed to currently according to the first map data set;
receive confirmation information of the first working area to proceed to currently input by the user based on the selection set;
output the fourth instruction to control the autonomous working apparatus to move to that first working area to execute the mowing task.

24. The autonomous working apparatus according to claim 22, wherein the first map data set is generated based on the position information of the autonomous working apparatus.

25. The autonomous working apparatus according to claim 22, wherein the first map data set also includes map data of multiple first working areas belonging to the same household.

26. The autonomous working apparatus according to claim 1, wherein the autonomous working apparatus further comprises:
a power supply assembly, connected to the control circuit, configured to store a preset amount of power to supply power to the autonomous working apparatus;
wherein the control circuit is further configured to:
determine the power required for mowing the current first working area based on the map data of the current first working area;
provide the power required for mowing to a determination process, wherein the determination process is used to determine whether the current remaining power of the power supply assembly is greater than or equal to the power required for mowing;
output the first instruction to the driving assembly and the cutting assembly if the determination result is yes.

27. The autonomous working apparatus according to claim 1, wherein the autonomous working apparatus is also adapted to perform at least one of the following working tasks: snow removal task, watering task, leaf blowing task, sweeping task.

28. An autonomous working apparatus, adapted to perform at least one working task on a surface of a working area, wherein the autonomous working apparatus comprises:
a housing;
a cutting assembly and a driving assembly, each connected to the housing; and,
a control circuit connected to the cutting assembly and the driving assembly;
wherein the control circuit is at least configured to execute a lawn mowing control process, the lawn mowing control process comprising:
outputting a working instruction to the cutting assembly and the driving assembly to control the autonomous working apparatus to enter working area A to execute a mowing task, and marking the map data of working area A as active;
outputting a working instruction to the cutting assembly and the driving assembly to control the autonomous working apparatus to enter working area B to execute a mowing task, and marking the map data of working area B as active, and removing or marking the map data of working area A as inactive after detecting completion of one coverage of working area A;
wherein the average working efficiency of the autonomous working apparatus to complete the mowing tasks of working area A and working area B is 10 min-40 min per thousand square meters.

29. The autonomous working apparatus according to claim 28, wherein the autonomous working apparatus further comprises:
a sensor assembly, electrically connected to the control circuit, configured to generate sensor data based on collected information, wherein the sensor data includes positioning data for indicating position information of the autonomous working apparatus;
wherein the lawn mowing control process further comprises:
outputting the working instruction to the cutting assembly and the driving assembly based at least on the map data of the working area and the positioning data to control the autonomous working apparatus to execute the mowing task in the working area with a regular path;
wherein,
the regular path is configured to make the coverage rate of the autonomous working apparatus greater than or equal to 50%;
the driving assembly is configured to make the movement rate of the autonomous working apparatus range from 0.5 m/s to 5 m/s;
the cutting assembly is configured to make the actual cutting width of the autonomous working apparatus not less than 500 mm.

30. The autonomous working apparatus according to claim 29, wherein
the regular path is configured to make the coverage rate of the autonomous working apparatus greater than or equal to 60%;
the driving assembly is configured to make the movement rate of the autonomous working apparatus range from 1 m/s to 3 m/s;
the cutting assembly is configured to make the actual cutting width of the autonomous working apparatus range from 560 mm to 800 mm.

31. An autonomous working apparatus, adapted to perform at least one working task on a surface of a working area, wherein the autonomous working apparatus comprises:
a housing;
a cutting assembly and a driving assembly, each connected to the housing; and,
a control circuit connected to the cutting assembly and the driving assembly;
wherein the control circuit is at least configured to execute a lawn mowing control process, the lawn mowing control process comprising:
obtaining map data of a first working area for an intended mowing task, wherein the map data of the first working area is provided by a memory that pre-stores map data of different working areas;
planning a movement path of the autonomous working apparatus in the first working area based at least on the map data of the first working area, and outputting a working instruction to the driving assembly and the cutting assembly to control the autonomous working apparatus to execute the mowing task of the first working area along the planned movement path until one coverage of the first working area is completed;
outputting a waiting instruction to the driving assembly and the cutting assembly to control the autonomous working apparatus to switch to a state of waiting to execute the mowing task of the next first working area.

32. The autonomous working apparatus according to claim 31, wherein
the mowing task includes shredding grass to be cut, and the cutting assembly includes a mulching assembly.

33. The autonomous working apparatus according to claim 31, wherein the mowing task includes cutting and collecting grass to be cut, and the autonomous working apparatus further includes a grass collection assembly working in cooperation with the cutting assembly.

34. An autonomous working system, wherein the autonomous working system comprises:
an autonomous working apparatus, comprising a housing, a cutting assembly and a driving assembly each connected to the housing, and a control circuit connected to the cutting assembly and the driving assembly;
wherein the control circuit is at least configured to execute a lawn mowing control process, the lawn mowing control process comprising:
obtaining map data of each first working area for an intended mowing task;
planning a movement path of the autonomous working apparatus in each first working area based at least on the map data, and outputting a working instruction to the driving assembly and the cutting assembly to control the autonomous working apparatus to execute mowing tasks in multiple independent first working areas within one day;
wherein each mowing task includes:
autonomously traversing the current first working area along the planned movement path and performing single-pass mowing; wherein the single-pass mowing is achieved through simultaneously mulching or collecting grass during mowing;
switching to a state of moving or preparing to move toward the next first working area after completing the traversal of the current first working area;
and,
an external power source, configured to be coupled with the autonomous working apparatus to provide at least power support for the autonomous working apparatus to execute the mowing task.

35. The autonomous working system according to claim 34, wherein
the autonomous working apparatus is configured to store an amount of power less than or equal to 15 kWh, and/or the external power source is configured to store an amount of power less than or equal to 15 kWh.

36. The autonomous working system according to claim 34, wherein the external power source includes:
a first energy storage unit, configured to be coupled with the autonomous working apparatus to supply power to the autonomous working apparatus;
a second energy storage unit, configured to be coupled with the first energy storage unit and the autonomous working apparatus respectively to supply power to the first energy storage unit and the autonomous working apparatus respectively.

37. The autonomous working system according to claim 34, wherein
the control circuit is further configured to:
determine the power required for mowing the current first working area based on the map data of the current first working area;
provide the power required for mowing to a determination process, wherein the determination process is used to determine whether the current remaining power of the autonomous working apparatus is greater than or equal to the power required for mowing;
output prompt information to remind the user to charge the autonomous working apparatus through the external power source if the determination result is no.

38. An autonomous working apparatus, adapted to perform at least one working task on a surface of a working area, wherein the autonomous working apparatus comprises:
a housing;
a cutting assembly and a driving assembly, each connected to the housing; and,
a control circuit connected to the cutting assembly and the driving assembly;
wherein the control circuit is at least configured to execute a lawn mowing control process, the lawn mowing control process comprising:
obtaining map data of each first working area for an intended mowing task;
planning a movement path of the autonomous working apparatus in each first working area based at least on the map data, and outputting a working instruction to the driving assembly and the cutting assembly to control the autonomous working apparatus to execute mowing tasks in multiple independent first working areas;
wherein each mowing task includes:
autonomously traversing the current first working area along the planned movement path and performing single-pass mowing, wherein the single-pass mowing is achieved through simultaneously mulching or collecting grass during mowing;
switching to a state of moving or preparing to move toward the next first working area after completing the traversal of the current first working area;
wherein each mowing task is charged separately based at least on the map data of the current first working area.

39. A working method of an autonomous working apparatus, wherein the autonomous working apparatus is adapted to perform at least one working task on a surface of a working area, wherein
the method comprises:
obtaining map data of a first working area for an intended mowing task, wherein the map data of the first working area is provided by a memory that pre-stores map data of different working areas;
planning a movement path of the autonomous working apparatus in the first working area based at least on the map data of the first working area;
autonomously traversing the first working area along the planned movement path and performing single-pass mowing; wherein the single-pass mowing is achieved through simultaneously mulching or collecting grass during mowing;
switching to a state of moving or preparing to move toward the next first working area after completing the traversal of the first working area.

40. The working method according to claim 39, wherein the map data of the first working area includes boundary data of the first working area and position data of at least a portion of non-cuttable areas in the first working area;
the method comprises:
planning the movement path of the autonomous working apparatus in the first working area based at least on the boundary data of the first working area and the position data of the at least a portion of non-cuttable areas.

41. The working method according to claim 39, wherein the method comprises:
obtaining positioning data of the autonomous working apparatus;
planning the movement path of the autonomous working apparatus in the first working area based on the positioning data and the map data of the first working area.

42. The working method according to claim 41, wherein the planned movement path includes one or more of the following mowing paths:
a first mowing path for the autonomous working apparatus to move along the boundary of the first working area;
a second mowing path for the autonomous working apparatus to move along the island boundary in the first working area;
a regular third mowing path for the autonomous working apparatus to traverse the area to be mowed between the boundary of the first working area and the island boundary.

43. The working method according to claim 42, wherein the third mowing path comprises a composite of one or more of a boustrophedon path, a rectangular spiral path, and a spiral path.

44. The working method according to claim 39, wherein the method comprises:
obtaining positioning data of the autonomous working apparatus;
retrieving the map data of the first working area matching the position information of the autonomous working apparatus from the memory based on the positioning data.

45. An autonomous working system, wherein the autonomous working system comprises:
the autonomous working apparatus according to any one of claims 1-33, 38;
a terminal, communicatively connected with the autonomous working apparatus; and,
a server, communicatively connected with the autonomous working apparatus and the terminal, having the memory, configured to send the map data of the first working area to the autonomous working apparatus and/or the terminal before the autonomous working apparatus executes the mowing task.

46. The autonomous working system according to claim 45, wherein
the terminal is configured to:
display a selection set including the first working area to be selected by the user;
receive confirmation information of the first working area to proceed to currently input by the user based on the selection set to send a map transmission instruction to the server;
the server is configured to:
send the map data of the first working area indicated by the map transmission instruction to the autonomous working apparatus according to the map transmission instruction.

47. The autonomous working system according to claim 45, wherein
the autonomous working apparatus is configured to:
obtain real-time map data of the current first working area;
send the real-time map data to the terminal via the server;
the terminal is configured to:
display a map of the current first working area according to the real-time map data.

48. A computer-readable storage medium, wherein a computer program is stored on the storage medium, and steps of the method according to any one of claims 39-44 are implemented when the computer program is executed.

49. A computer device, wherein the computer device comprises:
a memory and a processor, wherein the memory stores a computer program;
the processor implements steps of the method according to any one of claims 39-44 when executing the computer program.
